# EUROPEAN PATENT SPECIFICATION

(11) **EP 4 377 396 B1**
(45) Date of publication and mention of the grant of the patent: **05.08.2026**
(21) Application number: 22754670.2
(22) Date of filing: 25.07.2022
(51) Int. Cl.: C08L 71/02, C08G 65/26, C08G 18/18, C08G 18/20, C08G 18/48, C08G 18/76

(54) **POLYETHER POLYOL BLENDS, A PROCESS FOR THEIR PREPARATION, FOAMS PREPARED FROM THESE POLYETHER POLYOL BLENDS AND A PROCESS FOR THEIR PREPARATION**
POLYETHERPOLYOL-MISCHUNGEN, VERFAHREN ZU IHRER HERSTELLUNG, AUS DIESEN POLYETHERPOLYOL-MISCHUNGEN HERGESTELLTE SCHÄUME UND VERFAHREN ZU IHRER HERSTELLUNG
MÉLANGES DE POLYÉTHER POLYOLS, PROCÉDÉ POUR LEUR PRÉPARATION, MOUSSES PRÉPARÉES À PARTIR DE CES MÉLANGES DE POLYÉTHER POLYOLS ET PROCÉDÉ POUR LEUR PRÉPARATION

(30) Priority: 28.07.2021 US 202117386798
(43) Date of publication of application: 05.06.2024
(73) Proprietor: Covestro LLC, Pittsburgh, PA 15205 (US)
(72) Inventor: LEWIS, Sharlene A., Pittsburgh, Pennsylvania 15205 (US); REESE, Jack R., Renfrew, Pennsylvania 16053 (US); BARKSBY, Nigel, Moon Township, Pennsylvania 15108 (US); NEAL, Brian L., Pittsburgh, Pennsylvania 15241 (US)
(74) Representative: Levpat
(86) International application number: PCT/US2022/038154
(87) International publication number: WO 2023/009423

(56) References cited:
- US-A1- 2016 340 464

## Description

### FIELD

The invention relates to polyether polyol blends, a process for preparing these polyether polyol blends, viscoelastic flexible polyurethane foams comprising these polyether polyol blends, and a process for preparing these viscoelastic polyurethane foams from these polyether polyol blends. The polyether polyol blends provide simpler formulation processes by reducing the number of polyether polyols needed in the formulation while maintaining good physical properties in foams comprising these polyether polyol blends.

### BACKGROUND

The popularity of viscoelastic polyurethane foam, also referred to as memory foam or low resilience foam, has significantly increased in recent years as pillows, toppers or layers in mattresses and bed in a box foams. It is also used in other home and office furnishings as well as automotive applications. This increased use has created a demand for better quality viscoelastic foams with high air flows and improved physical properties such as reduced compression sets and better tear strength.

In US 2016/340464 A1 a polyol composition and a process for preparing these polyol compositions is disclosed. These polyol compositions comprise (a) an in-situ formed polyol blend which comprises (i) one or more polyether monols and (ii) one or more polyether polyols; and (b) a polyether polyol. The latter also relates to a process for preparing an open celled, flexible polyurethane foam in which the isocyanate-reactive component comprises this polyol composition, and to a viscoelastic polyurethane foam wherein the isocyanate-reactive comprise the polyol composition.

### SUMMARY

The polyether polyol blends have an overall hydroxyl number of 56 mg KOH/g to 140 mg KOH/g, an overall functionality of greater than 2, and an overall content of copolymerized oxyethylene of 20 to 40% by weight. These polyether polyol blends comprise:
(a) a monol initiated oxyalkylene ether having a hydroxyl number of less than or equal to 56 mg KOH/g, and containing less than or equal to 20% by weight of copolymerized oxyethylene, based on the total weight of the monol initiated oxyalkylene ether (a),
(b) a polyether polyol having a hydroxyl number of 47 mg KOH/g to 300 mg KOH/g, and a nominal functionality of 2, with the polyether polyol comprising a first oxide block containing 20 to 50% by weight of copolymerized oxyethylene, based on the weight of the polyether polyol at the end of the first oxide block, and a second oxide block comprising 10 to 50% by weight of copolymerized oxyethylene, based on the weight of the second oxide block,
   and
(c) a polyether polyol having a hydroxyl number of 47 mg KOH/g to 300 mg KOH/g, and a nominal functionality of greater than 2 and up to 8, with the polyether polyol comprising a first oxide block having 20 to 50% by weight of copolymerized oxyethylene, based on the weight of the polyether polyol at the end of the first oxide block, and a second oxide block comprising 10 to 50% by weight of copolymerized oxyethylene, based on the weight of the second oxide block;
wherein the polyether polyol blend comprises (i) 20 to 50% by weight of (a) the monol initiated oxyalkylene ether and (ii) 80 to 50% by weight of polyether polyols (b) and (c), with the sum of the %'s by weight of (i) and (ii) totaling 100% by weight of the polyether polyol blend, and wherein (ii) the 80 to 50% by weight of polyether polyols (b) and (c) comprises polyether polyol (b) in an amount of 10 to 90% by weight and polyether polyol (c) in an amount of 90 to 10% by weight.

The invention also relates to *in-situ* formed polyether polyol blends having an overall hydroxyl number of 56 mg KOH/g to 140 mg KOH/g, an overall functionality of greater than 2, and an overall content of copolymerized oxyethylene of 20 to 40% by weight. These *in-situ* formed polyether polyol blends comprise:
(a) a monol initiated oxyalkylene ether having a hydroxyl number of less than or equal to 56 mg KOH/g, and containing less than or equal to 20% by weight of copolymerized oxyethylene, based on the total weight of the monol initiated oxyalkylene ether (a),
(b) a polyether polyol having a hydroxyl number of 47 mg KOH/g to 300 mg KOH/g, and a nominal functionality of 2, with the polyether polyol comprising a first oxide block containing 20 to 50% by weight of copolymerized oxyethylene, based on the weight of the polyether polyol at the end of the first oxide block, and a second oxide block comprising 10 to 50% by weight of copolymerized oxyethylene, based on the weight of the second oxide block,
   and
(c) a polyether polyol having a hydroxyl number of 47 mg KOH/g to 300 mg KOH/g, and a nominal functionality of greater than 2 and up to 8, with the polyether polyol comprising a first oxide block having 20 to 50% by weight of copolymerized oxyethylene, based on the weight of the polyether polyol at the end of the first oxide block, and a second oxide block comprising 10 to 50% by weight of copolymerized oxyethylene, based on the weight of the second oxide block;
wherein the *in-situ* formed polyether polyol blend comprises (i) 20 to 50% by weight of (a) the monol initiated oxyalkylene ether and (ii) 80 to 50% by weight of polyether polyols (b) and (c), with the sum of the %'s by weight of (i) and (ii) totaling 100% by weight of the *in-situ* formed polyether polyol blend, and wherein (ii) the 80 to 50% by weight of polyether polyols (b) and (c) comprises polyether polyol (b) in an amount of 10 to 90% by weight and polyether polyol (c) in an amount of 90 to 10% by weight.

The process of preparing the *in-situ* formed polyether polyol blend having an overall hydroxyl number of 56 mg KOH/g to 140 mg KOH/g, an overall functionality greater than 2, and an overall content of copolymerized oxyethylene of 20% to 40% by weight, comprises:
I) introducing into a reaction vessel a mixture comprising:
   (1) an initially charged starter (Sᵢ) comprising a monofunctional compound having a hydroxyl number of less than or equal to 80 mg KOH/g,
      and
   (2) a DMC (double metal cyanide) catalyst;
II) feeding
   (1) an epoxide comprising propylene oxide and ethylene oxide in a weight ratio of 100:0 to 80:20,
      into the reaction vessel;
III) allowing the epoxide and the initially charged starter (Sᵢ) to react and to polymerize by feeding the epoxide until the equivalent weight of the monofunctional compound is increased by at least 10% by weight and reaches a value between 1,500 and 6,000;
IV) feeding
   (1) an epoxide comprising propylene oxide and ethylene oxide in a weight ratio of 78:22 to 45:55;
      while continuously adding
   (2) a continuously added starter (S_{c}) having a nominal functionality of greater than 2 to 6, and an equivalent weight of 28 to 400,
   into the reaction vessel while continuing to feed epoxide;
V) completing addition of the continuously added starter (S_{c});
VI) feeding
   (1) an epoxide comprising propylene oxide and ethylene oxide fed at the same ratio as IV) (1) to fully react all the continuously added starter (S_{c});
VII) allowing the mixture to continue to polymerize in the reaction vessel thereby forming
   (1) a polyether polyol with a first alkylene oxide block added to the continuously added starter (S_{c}) having 20 to 50% by weight of copolymerized oxyethylene, based on the weight of the amounts of epoxide added in IV) (1), of continuously added starter (S_{c}) added in IV) (2), and of epoxide added in VI) (1);
VIII) feeding
   (1) an epoxide comprising propylene oxide and ethylene oxide;
IX) allowing the mixture to continue to polymerize in the reaction vessel thereby forming
   (1) a polyether polyol with a first alkylene oxide block added to the continuously added starter (S_{c}) having 20 to 50% by weight of copolymerized oxyethylene, based on the weight of the amounts of epoxide added in IV)(1), of continuously added starter (S_{c}) added in IV)(2), and of epoxide added in VI)(1), and a second oxide block comprising 10 to 50% by weight of copolymerized oxyethylene, based on the weight of epoxide added in VIII)(1);
X) thereby forming
   (1) an *in-situ* formed polyether polyol blend which has an overall hydroxyl number of 56 mg KOH/g to 140 mg KOH/g, an overall functionality of greater than 2, and an overall content of copolymerized oxyethylene of 20% to 40% by weight, and which comprises
      (a) a monol initiated oxyalkylene ether having a hydroxyl number of less than or equal to 56 mg KOH/g, and containing less than or equal to 20% by weight of copolymerized oxyethylene, based on 100% by weight of (a),
      (b) a polyether polyol having a hydroxyl number of 47 to 300 mg KOH/g, and a nominal functionality of 2, with the polyether polyol comprising a first oxide block containing 20 to 50% by weight of copolymerized oxyethylene, based on the weight of the polyether polyol at the end of the first oxide block, and a second oxide block comprising 10% to 50% by weight of copolymerized oxyethylene, based on the weight of the second oxide block,
         and
      (c) a polyether polyol having a hydroxyl number of 47 to 300 mg KOH/g, and a nominal functionality of greater than 2 and up to 8, with the polyether polyol comprising a first oxide block having 20% to 50% by weight of copolymerized oxyethylene, based on the weight of the polyether polyol at the end of the first oxide block, and a second oxide block comprising 10 to 50% by weight of copolymerized oxyethylene, based on the weight of the second oxide block;
wherein the *in-situ* formed polyether polyol blend comprises (i) 20% to 50% by weight of (a) the monol initiated oxyalkylene ether, and (ii) 80 to 50% by weight of polyether polyols (b) and (c), with the sum of the %'s by weight totaling 100% by weight of the *in-situ* formed polyether polyol blend, and wherein (ii) the 80 to 50% by weight of polyether polyols (b) and (c) comprises polyether polyol (b) in an amount of 10 to 90% by weight and polyether polyol (c) in an amount of 90 to 10% by weight.

The invention also relates to a viscoelastic polyurethane foam comprising the reaction product of:
(A) toluene diisocyanate,
   with
(B) an isocyanate-reactive component comprising
   (1) a polyether polyol blend having an overall hydroxyl number of 56 mg KOH/g to 140 mg KOH/g, an overall functionality of greater than 2, and an overall content of copolymerized oxyethylene of 20 to 40% by weight, which comprises:
      (a) a monol initiated oxyalkylene ether having a hydroxyl number of less than or equal to 56 mg KOH/g, and containing less than or equal to 20% by weight of copolymerized oxyethylene, based on the total weight of the monol initiated oxyalkylene ether (a),
      (b) a polyether polyol having a hydroxyl number of 47 mg KOH/g to 300 mg KOH/g, and a nominal functionality of 2, with the polyether polyol comprising a first oxide block containing 20 to 50% by weight of copolymerized oxyethylene, based on the weight of the polyether polyol at the end of the first oxide block, and a second oxide block comprising 10 to 50% by weight of copolymerized oxyethylene, based on the weight of the second oxide block,
         and
      (c) a polyether polyol having a hydroxyl number of 47 mg KOH/g to 300 mg KOH/g, and a nominal functionality of greater than 2 and up to 8, with the polyether polyol comprising a first oxide block having 20 to 50% by weight of copolymerized oxyethylene, based on the weight of the polyether polyol at the end of the first oxide block, and a second oxide block comprising 10 to 50% by weight of copolymerized oxyethylene, based on the weight of the second oxide block;
      wherein the polyether polyol blend comprises (i) 20 to 50% by weight of (a) the monol initiated oxyalkylene ether and (ii) 80 to 50% by weight of polyether polyols (b) and (c), with the sum of the %'s by weight of (i) and (ii) totaling 100% by weight of the polyether polyol blend, and wherein (ii) the 80 to 50% by weight of polyether polyols (b) and (c) comprises polyether polyol (b) in an amount of 10 to 90% by weight and polyether polyol (c) in an amount of 90 to 10% by weight;
in the presence of:
(C) a blowing agent;
(D) a catalyst;
   and
(E) a surfactant.

The invention also relates to a process for the preparation of a viscoelastic foam. This process comprises reacting:
(A) toluene diisocyanate,
   with
(B) an isocyanate-reactive component comprising:
   (1) a polyether polyol blend having an overall hydroxyl number of 56 mg KOH/g to 140 mg KOH/g, an overall functionality of greater than 2, and an overall content of copolymerized oxyethylene of 20 to 40% by weight, which comprises:
      (a) a monol initiated oxyalkylene ether having a hydroxyl number of less than or equal to 56 mg KOH/g, and containing less than or equal to 20% by weight of copolymerized oxyethylene, based on the total weight of the monol initiated oxyalkylene ether (a),
      (b) a polyether polyol having a hydroxyl number of 47 mg KOH/g to 300 mg KOH/g, and a nominal functionality of 2, with the polyether polyol comprising a first oxide block containing 20 to 50% by weight of copolymerized oxyethylene, based on the weight of the polyether polyol at the end of the first oxide block, and a second oxide block comprising 10 to 50% by weight of copolymerized oxyethylene, based on the weight of the second oxide block,
         and
      (c) a polyether polyol having a hydroxyl number of 47 mg KOH/g to 300 mg KOH/g, and a nominal functionality of greater than 2 and up to 8, with the polyether polyol comprising a first oxide block having 20 to 50% by weight of copolymerized oxyethylene, based on the weight of the polyether polyol at the end of the first oxide block, and a second oxide block comprising 10 to 50% by weight of copolymerized oxyethylene, based on the weight of the second oxide block;
      wherein the polyether polyol blend comprises (i) 20 to 50% by weight of (a) the monol initiated oxyalkylene ether and (ii) 80 to 50% by weight of polyether polyols (b) and (c), with the sum of the %'s by weight of (i) and (ii) totaling 100% by weight of the polyether polyol blend, and wherein (ii) the 80 to 50% by weight of polyether polyols (b) and (c) comprises polyether polyol (b) in an amount of 10 to 90% by weight and polyether polyol (c) in an amount of 90 to 10% by weight;
in the presence of:
(C) a blowing agent;
(D) a catalyst;
   and
(E) a surfactant.

### DETAILED DESCRIPTION

In this specification, other than where otherwise indicated, all numerical parameters are to be understood as being prefaced and modified in all instances by the term "about", in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described in the present description should at least be construed in light of the number of reported significant digits and by applying ordinary rounding techniques.

Also, any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. All end points of any range are included unless specified otherwise. Any maximum numerical limitation recited in this specification is intended to include all lower numerical limitations subsumed therein and any minimum numerical limitation recited in this specification is intended to include all higher numerical limitations subsumed therein. Accordingly, Applicant(s) reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. § 112 and 35 U.S.C. § 132(a).

The grammatical articles "one", "a", "an", and "the", as used in this specification, are intended to include "at least one" or "one or more", unless otherwise indicated. Thus, the articles are used in this specification to refer to one or more than one (i.e., to "at least one") of the grammatical objects of the article. By way of example, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

Equivalent weights and molecular weights given herein in Daltons (Da) are number average equivalent weights and number average molecular weights respectively, unless indicated otherwise, and were determined by GPC as described herein.

All number average and weight average, Mₙ and M_{w}, respectively, molecular weights herein were determined by gel-permeation chromatography (GPC) using a method based on DIN 55672-1 employing chloroform as the eluent with a mixed bed column (Agilent PL Gel; SDVB; 3 micron Pore diameter: 1xMixed-E + 5 micron Pore diameter: 2xMixed-D), *refractive index* (RI) detection and calibrated with polyethylene glycol.

All hydroxyl numbers (i.e. OH numbers) herein were determined according to ASTM D4274-11, and are reported in mg KOH/g monol or polyol, as the case may be.

The molecular weight is the number average equivalent weight multiplied by the starter functionality. The hydroxyl number equals 56,100 divided by the equivalent weight.

As used herein, the term "nominal functionality" refers to the functionality of a polyether polyol which is based solely on the functionality of the starter compound or initiator used in preparing the polyether polyol. The nominal functionality is typically used to describe the functionality of a specific compound.

As used herein, the term "overall functionality" refers to the average number of reactive groups (e.g. hydroxyl, amine, etc.) which are present per molecule of the polyether polyol or polyether polyol blend being described. This term is typically used when either a polyether polyol is prepared from two or more starter compounds or initiators that have different functionalities and/or when a blend of polyether polyols is used in which the individual polyether polyols have different functionalities.

Isocyanate index is the relative stoichiometric amount of isocyanate functional groups necessary to react with the isocyanate reactive groups present in the overall foam formulation. It is expressed as a percentage in this application; thus equal stoichiometric amounts of isocyanate functional groups and isocyanate reactive functional groups in the formulation provide an isocyanate index of 100%.

As used herein, the term "viscoelastic flexible foam" or "viscoelastic flexible polyurethane foam" refers to low-resilience polyurethane foam and is commonly referred to as memory foam. These foams typically provide uniform support of any weight placed on the foam targeted to relieve pressure points, and the foam recovers slowly to its original shape once the weight is removed. These foams are mainly used for bedding, pillows, etc.

As set forth above, the polyether polyol blends herein may be physical blends of polyether polyols or they may be *in-situ* formed polyether polyol blends.

As used herein, the term "*in-situ* formed" with respect to a polyether polyol blend means producing the polyether polyol blend during the course of an alkoxylation reaction in which at least one epoxide is added to a mixture of an initial starter (Sᵢ) and alkoxylation catalyst to initiate the alkoxylation and then at least one continuous starter (S_{c}) feed is added during the course of the alkoxylation to form a blend of polyether polyols that can vary in molecular weight and functionality.

The polyether polyol blends have an overall functionality of greater than 2, an overall hydroxyl number of 56 mg KOH/g to 140 mg KOH/g, and an overall content of copolymerized oxyethylene of 20 to 40% by weight. These polyether polyol blends may also have an overall functionality of greater than 2, such as greater than 2 and up to 3, and an overall hydroxyl number of 80 mg KOH/g to 120 mg KOH/g. These polyether polyol blends comprise: (a) a monol initiated oxyalkylene ether having a hydroxyl number less than or equal to 56 mg KOH/g, and containing less than or equal to 20% by weight of copolymerized oxyethylene, based on the total weight of monol initiated oxyalkylene ether (a); (b) a polyether polyol having a hydroxyl number of 47 to 300 mg KOH/g, and a nominal functionality of 2, in which the polyether polyol comprises a first oxide block having 20 to 50% by weight of copolymerized oxyethylene, based on the weight of the polyether polyol at the end of the first oxide block, and a second oxide block comprising 10 to 50% by weight of copolymerized oxyethylene, based on the weight of the second oxide block; and (c) a polyether polyol having a hydroxyl number of 47 to 300 mg KOH/g, and a nominal functionality of greater than 2 and up to 8, in which the polyether polyol comprises a first oxide block having 20 to 50% by weight of copolymerized oxyethylene, based on the weight of the polyether polyol at the end of the first oxide block, and a second oxide block comprising 10 to 50% by weight of copolymerized oxyethylene, based on the weight of the second oxide block; wherein the polyether polyol blend comprises (i) 20 to 50% by weight of (a) the monol initiated oxyalkylene ether, and (ii) 80 to 50% by weight of polyether polyols (b) and (c), with the sum of the %'s by weight of (i) and (ii) totaling 100% by weight of the polyether polyol blend, and wherein (ii) the 80 to 50% by weight of polyether polyols (b) and (c) comprises polyether polyol (b) in an amount of 10 to 90% by weight and polyether polyol (c) in an amount of 90 to 10% by weight.

Suitable monol initiated oxyalkylene ethers (a) have a hydroxyl number of less than or equal to 56 mg KOH/g and contain less than or equal to 20% by weight of copolymerized oxyethylene, based on the total weight of the monol initiated oxyalkylene ether. These monols have a hydroxyl number less than or equal to 56 mg KOH/g or less than or equal to 28 mg KOH/g.

Suitable starters for (a) the monol initiated oxyalkylene ethers include polyoxyalkylene monols formed by addition of multiple equivalents of epoxide to a low equivalent weight monofunctional starter. Low equivalent weight monofunctional starters useful herein may be linear or branched compounds, and/or may be naturally-derived or synthetic compounds. Some examples of suitable low equivalent weight monofunctional starters include compounds such as, for example, methanol, ethanol, phenols, allyl alcohol, butyl carbitol, longer chain alcohols, etc., and mixtures thereof. Examples of suitable longer chain alcohols include C₁₀, C₁₂, C₁₃, C₁₄ and/or C₁₅ monols, which may be used individually or as mixtures. Suitable monoethers include a hydrocarbyl residue (Z) in which the hydrocarbyl residue is a C₄-C₆₀, such as a C₉-C₃₀ alkyl, aryl or aralkyl group. The hydrocarbyl residue is typically derived from a monohydroxyl compound such as an alcohol or a phenol. Also suitable are monoethers derived from phenols substituted with C₄-C₁₅ alkyl groups such as, for example, nonylphenol, etc. Suitable epoxides can include, for example, ethylene oxide, propylene oxide, butylene oxide, styrene oxide, etc. and mixtures thereof. The epoxides can be polymerized with the low equivalent weight monofunctional starters using well-known techniques and a variety of catalysts, including alkali metals, alkali metal hydroxides and alkoxides, double metal cyanide complexes, and many more. Suitable monofunctional starters include those monols described in, for example, U.S. Patents 6,391,935 and 6,821,308. Suitable polyoxyalkylene monols to be used as the starter for (a) may contain up to 20% by weight, based on 100% by weight of the polyoxyalkylene monol, of copolymerized oxyethylene.

The monol initiated oxyalkylene ether (a) may also be characterized in one embodiment as containing up to 20% by weight of copolymerized oxyethylene, based on the total weight of the monol initiated oxyalkylene ether (a). This weight percentage includes the initiator or starter and all of the added epoxide(s). These monol initiated oxyalkylene ethers (a) may contain less than or equal to 20% by weight, or less than or equal to 15% by weight, or less than or equal to 10% by weight, based on the total weight of the monol initiated oxyalkylene ether (a), of copolymerized oxyethylene. These monol initiated oxyalkylene ethers (a) may also contain more than 0%, or at least 2% or at least 5%, based on the total weight of the monol initiated oxyalkylene ether (a), of copolymerized oxyethylene. The amount of copolymerized oxyethylene present in the monol initiated oxyalkylene ethers (a) may vary between any combination of these upper and lower values, inclusive, such as, more than 0% to less than or equal to 20%, or at least 2% to less than or equal to 15%, or at least 5% to less than or equal to 10% by weight, based on the total weight of the monol initiated oxyalkylene ether (a).

The monol initiated oxyalkylene ethers (a) can have virtually any desired arrangement of oxyalkylene units with the proviso that they contain less than or equal to 20% of copolymerized oxyethylene, based on the total weight of the monol initiated oxyalkylene ether (a). This weight percentage includes the initiator or starter and all of the added epoxide(s). Some examples of suitable monol initiated oxyalkylene ethers (a) include PO homopolymers, block EO-PO copolymers, random EO/PO copolymers, PO polymers that are "tipped" with EO or with a mixture of EO and PO are possible. These "tipped" PO polymers should use a mixture of EO and PO to achieve a particular oxyethylene content and/or a desired primary hydroxyl content, or any other desired configuration. The so-called PO homopolymers are suitable with the proviso that they satisfy the above described amounts of copolymerized oxyethylene. The epoxides can be polymerized using well known techniques and a variety of catalysts, including alkali metals, alkali metal hydroxides and alkoxides, double metal cyanide complexes and many more.

In one embodiment, the monol initiated oxyalkylene ether (a) comprises an oxypropylene block next to the low equivalent weight monofunctional starter followed by a mixed oxypropylene and oxyethylene block at the end of the chain. In another embodiment, the oxyalkylene block at the end of the chain comprises copolymerized oxypropylene and copolymerized oxyethylene wherein the copolymerized oxyethylene content is 20% by weight or less, based on 100% by weight of the oxyalkylene block.

Suitable polyether polyols for component (b) typically have a hydroxyl number of 47 to 300 mg KOH/g, and a nominal functionality of 2. These polyether polyols may have hydroxyl numbers of at least 47 mg KOH/g, or at least 70 mg KOH/g. The polyether polyols may also have hydroxyl numbers of less than or equal to 300 mg KOH/g, or of less than or equal to 240 mg KOH/g. Suitable polyether polyols may also have a hydroxyl number ranging between any combination of these upper and lower values, inclusive, such as 47 to 300 mg KOH/g, or 70 to 240 mg KOH/g. These polyether polyols (b) may be prepared from low equivalent weight starters such as, for example, propylene glycol, dipropylene glycol, ethylene glycol, tripropylene glycol, water, methyl-1,3-propanediol, and the like, and mixtures thereof.

Suitable polyether polyols for component (b) comprise a first oxide block having 20 to 50% by weight of copolymerized oxyethylene, based on the weight of the polyether polyol at the end of the first oxide block, and a second oxide block comprising 10 to 50% by weight of copolymerized oxyethylene, based on the weight of the second oxide block.

The first oxide block of these polyether polyols may comprise at least 20%, or at least 25% of copolymerized oxyethylene, based on the weight of the polyether polyol at the end of the first oxide block. In addition, the first oxide block of these polyether polyols may contain 50% or less, or 45% or less, of copolymerized oxyethylene, based on the weight of the polyether polyol at the end of the first oxide block. Thus, the first oxide block of this polyether polyol may comprise any amount of copolymerized oxyethylene between the above disclosed upper and lower values, inclusive, unless otherwise stated, such as 20% to 50% by weight or 25% to 45% by weight (based on the weight of the polyether polyol at the end of the first oxide block).

Once the addition of the first oxide block is complete, the polyether polyol has a hydroxyl number of 100 to 420 mg KOH/g, a nominal functionality of 2, and contains 20 to 50% by weight of copolymerized oxyethylene, based on the weight of the polyether polyol at the end of the first oxide block. This first oxide block is formed by the copolymerization of ethylene oxide and propylene oxide in the presence of a low equivalent weight starter having a nominal functionality of 2.

The second oxide block of these polyether polyols may comprise at least 10%, or at least 15%, or at least 20%, of copolymerized oxyethylene, based on the weight of the second oxide block. In addition, the second oxide block of these polyether polyols may contain 50% or less, or 45% or less of copolymerized oxyethylene, based on the weight of the second oxide block. Thus, the second oxide block of this polyether polyol may comprise any amount of copolymerized oxyethylene between the above disclosed upper and lower values, inclusive, unless otherwise stated, such as 10% to 50% by weight, or 15% to 45% by weight, or 20% to 45% by weight (based on the weight of the second oxide block).

These polyether polyols (b) can be block EO-PO copolymers, EO-capped polyoxypropylenes, random EO/PO copolymers, PO polymers that are "tipped" with a mixture of EO and PO to achieve the desired amount of copolymerized oxyethylene and/or a particular primary hydroxyl content, random EO/PO copolymers that vary the ratio of EO to PO along the chain to provide EO rich end groups or PO rich end groups or any other desired configuration. The epoxides can be polymerized using well-known techniques and a variety of catalysts, including alkali metals, alkali metal hydroxides and alkoxides, double metal cyanide complexes, and many more.

Suitable polyether polyols for component (c) typically have a hydroxyl number of 47 to 300 mg KOH/g, a nominal functionality of greater than 2 and up to 8. These polyether polyols may also have hydroxyl numbers of at least 47 mg KOH/g or at least 70 mg KOH/g. The polyether polyols may also have hydroxyl numbers of less than or equal to 300 mg KOH/g or of less than or equal to 240 mg KOH/g. Suitable polyether polyols may also have a hydroxyl number ranging between any combination of these upper and lower values, inclusive, such as 47 to 300 mg KOH/g or 70 to 240 mg KOH/g. The polyether polyols may also have a nominal functionality of greater than 2 or of at least 3. The nominal functionality of the polyether polyols may also be less than or equal to 8 or less than or equal to 6. Suitable polyether polyols may have a nominal functionality ranging between any combination of these upper and lower values, inclusive, such as greater than 2 and up to 8 or 3 to 6. These polyether polyols (c) may be prepared from low equivalent weight starters such as, for example, glycerin, trimethylolpropane, pentaerythritol, sucrose, sorbitol, and the like, and mixtures thereof.

Suitable polyether polyols for component (c) comprise a first oxide block having 20 to 50% by weight of copolymerized oxyethylene, based on the weight of the polyether polyol at the end of the first oxide block, and a second oxide block comprising 10 to 50% by weight of copolymerized oxyethylene, based on the weight of the second block.

The first oxide block of these polyether polyols may comprise at least 20%, or at least 25%, of copolymerized oxyethylene, based on the weight of the polyether polyol at the end of the first oxide block. In addition, the first oxide block of these polyether polyols may contain 50% or less, or 45% or less, of copolymerized oxyethylene, based on the weight of the polyether polyol at the end of the first oxide block. Thus, the first oxide block of this polyether polyol may comprise any amount of copolymerized oxyethylene between the above disclosed upper and lower values, inclusive, unless otherwise stated, such as 20% to 50% by weight, or 25% to 45% by weight (based on the weight of the polyether polyol at the end of the first oxide block).

Once the addition of the first oxide block is complete, the polyether polyol has a hydroxyl number of 100 to 420 mg KOH/g, a nominal functionality of greater than 2 and up to 8, and contains 20 to 50% by weight of copolymerized oxyethylene, based on the weight of the polyether polyol at the end of the first oxide block. This first oxide block is formed by the copolymerization of ethylene oxide and propylene oxide in the presence of a low equivalent weight starter having a nominal functionality of greater than 2 and up to 8.

The second oxide block of these polyether polyols may comprise at least 10%, or at least 15%, or at least 20%, of copolymerized oxyethylene, based on the weight of the second oxide block. In addition, the second oxide block of these polyether polyols may contain 50% or less, or 45% or less, of copolymerized oxyethylene, based on the weight of the second oxide block. Thus, the second oxide block of this polyether polyol may comprise any amount of copolymerized oxyethylene between the above disclosed upper and lower values, inclusive, unless otherwise stated, such as 10% to 50% by weight, or 15% to 45% by weight, or 20% to 45% by weight (all based on the weight of the second oxide block).

These polyether polyols (c) can be block EO-PO copolymers, EO-capped polyoxypropylenes, random EO/PO copolymers, PO polymers that are "tipped" with a mixture of EO and PO to achieve the desired amount of copolymerized oxyethylene and/or a particular primary hydroxyl content, random EO/PO copolymers that vary the ratio of EO to PO along the chain to provide EO rich end groups or PO rich end groups or any other desired configuration. The epoxides can be polymerized using well-known techniques and a variety of catalysts, including alkali metals, alkali metal hydroxides and alkoxides, double metal cyanide complexes, and many more.

In accordance with the invention, individual components, i.e. the monol initiated oxyalkylene ether (a), the polyether polyol (b) and the polyether polyol (c), of the polyether polyol blends described herein can be made individually using alkoxylation techniques which are well known in the literature and then blended together to form the polyether polyol blend, or they can be made using the *in-situ* process described herein.

These polyether polyol blends comprise (i) 20% to 50% by weight, or 25% to 40% by weight, of (a) the monol initiated oxyalkylene ether, and (ii) 80 to 50% by weight, or 75% to 60% of polyether polyols (b) and (c); wherein (ii) the 80 to 50% by weight (or 75 to 60% by weight) of polyether polyols (b) and (c) comprises polyether polyol (b) in an amount of 10 to 90% by weight (or 30 to 70 % by weight) and polyether polyol (c) in an amount of 90 to 10% by weight (or 70 to 30% by weight).

The process for preparing the polyether polyol blends having an overall functionality of greater than 2, an overall hydroxyl number of 56 mg KOH/g to 140 mg KOH/g, and having an overall content of copolymerized oxyethylene of 20 to 40% by weight, comprises blending: (a) a monol initiated oxyalkylene ether having a hydroxyl number of less than or equal to 56 mg KOH/g, and containing less than or equal to 20% by weight of copolymerized oxyethylene, based on the total weight of the monol initiated oxyalkylene ether (a), (b) a polyether polyol having a hydroxyl number of 47 mg KOH/g to 300 mg KOH/g, and a nominal functionality of 2, with the polyether polyol comprising a first oxide block containing 20 to 50% by weight of copolymerized oxyethylene, based on the weight of the polyether polyol at the end of the first oxide block, and a second oxide block comprising 10 to 50% by weight of copolymerized oxyethylene, based on the weight of the second oxide block, and (c) a polyether polyol having a hydroxyl number of 47 mg KOH/g to 300 mg KOH/g, and a nominal functionality of greater than 2 and up to 8, with the polyether polyol comprising a first oxide block having 20 to 50% by weight of copolymerized oxyethylene, based on the weight of the polyether polyol at the end of the first oxide block, and a second oxide block comprising 10 to 50% by weight of copolymerized oxyethylene, based on the weight of the second oxide block; wherein the polyether polyol blend comprises (i) 20 to 50% by weight of (a) the monol initiated oxyalkylene ether and (ii) 80 to 50% by weight of polyether polyols (b) and (c), with the sum of the %'s by weight of (i) and (ii) totaling 100% by weight of the polyether polyol blend, and wherein (ii) the 80 to 50% by weight of polyether polyols (b) and (c) comprises polyether polyol (b) in an amount of 10 to 90% by weight and polyether polyol (c) in an amount of 90 to 10% by weight.

The process of preparing the *in-situ* formed polyether polyol blends having an overall hydroxyl number of 56 mg KOH/g to 140 mg KOH/g, an overall functionality greater than 2, and an overall content of copolymerized oxyethylene of 20% to 40% by weight, comprises:
I) introducing into a reaction vessel a mixture comprising:
   (1) an initially charged starter (Sᵢ) comprising a monofunctional compound having a hydroxyl number of less than or equal to 80 mg KOH/g,
      and
   (2) a DMC (double metal cyanide) catalyst;
II) feeding
   (1) an epoxide comprising propylene oxide and ethylene oxide in a weight ratio of 100:0 to 80:20,
      into the reaction vessel;
III) allowing the epoxide and the initially charged starter (Sᵢ) to react and to polymerize by feeding the epoxide until the equivalent weight of the monofunctional compound is increased by at least 10% by weight and reaches a value between 1,500 and 6,000;
IV) feeding
   (1) an epoxide comprising propylene oxide and ethylene oxide in a weight ratio of 78:22 to 45:55;
      while continuously adding
   (2) a continuously added starter (S_{c}) having a nominal functionality of greater than 2 to 6, and an equivalent weight of 28 to 400,
   into the reaction vessel while continuing to feed epoxide;
V) completing addition of the continuously added starter (S_{c});
VI) feeding
   (1) an epoxide comprising propylene oxide and ethylene oxide fed at the same ratio as IV) (1) to fully react all the continuously added starter (S_{c});
VII) allowing the mixture to continue to polymerize in the reaction vessel thereby forming
   (1) a polyether polyol with a first alkylene oxide block added to the continuously added starter (S_{c}) having 20 to 50% by weight of copolymerized oxyethylene, based on the weight of the amounts of epoxide added in IV)(1), of continuously added starter (S_{c}) added in IV)(2), and of epoxide added in VI)(1);
VIII) feeding
   (1) an epoxide comprising propylene oxide and ethylene oxide;
IX) allowing the mixture to continue to polymerize in the reaction vessel thereby forming
   (1) a polyether polyol with a first alkylene oxide block added to the continuously added starter (S_{c}) having 20 to 50% by weight of copolymerized oxyethylene, based on the weight of the amounts of epoxide added in IV)(1), of continuously added starter (S_{c}) added in IV)(2) ,and of epoxide added in VI)(1), and a second oxide block comprising 10 to 50% by weight of copolymerized oxyethylene, based on the weight of epoxide added in VIII)(1);
X) thereby forming
   (1) an *in-situ* formed polyether polyol blend which has an overall hydroxyl number of 56 mg KOH/g to 140 mg KOH/g, an overall functionality of greater than 2, and an overall content of copolymerized oxyethylene of 20% to 40% by weight, and which comprises
      (a) a monol initiated oxyalkylene ether having a hydroxyl number of less than or equal to 56 mg KOH/g, and containing less than or equal to 20% by weight of copolymerized oxyethylene, based on 100% by weight of (a),
      (b) a polyether polyol having a hydroxyl number of 47 to 300 mg KOH/g, and a nominal functionality of 2, with the polyether polyol comprising a first oxide block containing 20 to 50% by weight of copolymerized oxyethylene, based on the weight of the polyether polyol at the end of the first oxide block, and a second oxide block comprising 10% to 50% by weight of copolymerized oxyethylene, based on the weight of the second oxide block,
         and
      (c) a polyether polyol having a hydroxyl number of 47 to 300 mg KOH/g, and a nominal functionality of greater than 2 and up to 8, with the polyether polyol comprising a first oxide block having 20% to 50% by weight of copolymerized oxyethylene, based on the weight of the polyether polyol at the end of the first oxide block, and a second oxide block comprising 10 to 50% by weight of copolymerized oxyethylene, based on the weight of the second oxide block;
wherein the *in-situ* formed polyether polyol blend comprises (i) 20% to 50% by weight of (a) the monol initiated oxyalkylene ether, and (ii) 80 to 50% by weight of polyether polyols (b) and (c), with the sum of the %'s by weight totaling 100% by weight of the *in-situ* formed polyether polyol blend, and wherein (ii) the 80 to 50% by weight of polyether polyols (b) and (c) comprises polyether polyol (b) in an amount of 10 to 90% by weight and polyether polyol (c) in an amount of 90 to 10% by weight.

In one embodiment, step VII) forms (1) from 2 to 4 polyether polyols, preferably 2 polyether polyols, with a first alkylene oxide block added to the continuously added starter (S_{c}) having 20 to 50% by weight of copolymerized oxyethylene, based on the weight of the amounts of epoxide added in IV)(1), of continuously added starter (S_{c}) added in IV)(2) and of epoxide added in VI)(1); and/or step IX) forms (1) from 2 to 4 polyether polyols, preferably 2 polyether polyols, with a first alkylene oxide block added to the continuously added starter (S_{c}) having 20 to 50% by weight of the amounts of epoxide added in IV)(1), of continuously added starter (S_{c}) added in IV)(2), and of epoxide added in VI)(1), and a second oxide block comprising 10 to 50% by weight of copolymerized oxyethylene, based on the weight of epoxide added in VIII)(1).

In general, any epoxide polymerizable using DMC catalysis can be used in the polyether polyol blend comprising a monol initiated oxyalkylene ether (a) and the two polyether polyols (b) and (c). Suitable epoxides include ethylene oxide, propylene oxide, butylene oxides (e.g., 1,2-butylene oxide, isobutylene oxide), styrene oxide, and the like, and mixtures thereof. Polymerization of epoxides using DMC catalysts and hydroxyl-containing starters results in polyether polyols, as is well understood in the art.

Other monomers that will copolymerize with an epoxide in the presence of a DMC catalyst may be included in the process of the invention to make other types of epoxide polymers. Some examples include epoxides copolymerized with oxetanes as described in U.S. Patent 3,404,109, to give polyethers, or with anhydrides to give polyesters or polyetheresters as described in U.S. Patents 5,145,883 and 3,538,043, or with carbon dioxide to form polyether carbonate polyols such as those described in U.S. Patents 4,826,887, 4,826,952, 4,826,953, 6,713,599, 7,977,501, 8,134,022, 8,324,419, 8,946,466 and 9,249,259, and U.S. Published Patent Application 2015/0232606.

In accordance with this process, an initially charged starter (Sᵢ) is used, and the initially charged starter (Sᵢ) is different than the continuously added starter (S_{c}). The initially charged starter (Sᵢ) is comprised of, either totally or in large part, a compound having one active hydrogen per molecule that can serve as a site for epoxide addition, and having a hydroxyl number of less than or equal to 80 mg KOH/g, or of less than or equal to 56. The suitable starters for the initially charged starter (Sᵢ) are the same monofunctional starters described above as suitable starters for the monol initiated oxyalkylene ether (a). These are formed by addition of multiple equivalents of epoxide to a low equivalent weight monofunctional starter such as, for example, methanol, ethanol, phenols, allyl alcohol, butyl carbitol, longer chain alcohols, etc., and mixtures thereof. Examples of suitable longer chain alcohols include C₁₀, C₁₂, C₁₃, C₁₄ and/or C₁₅ monols, which may be used individually or as mixtures. Suitable monoethers include a hydrocarbyl residue (Z) in which the hydrocarbyl residue is a C₄-C₆₀, such as a C₉-C₃₀, alkyl, aryl or aralkyl group. The hydrocarbyl residue is typically derived from a monohydroxyl compound, such as an alcohol or a phenol. Also suitable are monoethers derived from phenols substituted with C₄-C₁₅ alkyl groups, such as, for example, nonylphenol, etc. Suitable epoxides can include, for example, ethylene oxide, propylene oxide, butylene oxide, styrene oxide, etc. and mixtures thereof. The epoxides can be polymerized using well-known techniques and a variety of catalysts, including alkali metals, alkali metal hydroxides and alkoxides, double metal cyanide complexes, and many more. Suitable initially charged monofunctional starters (Sᵢ) can also be made, for example, by first producing a diol or triol and then converting all but one of the remaining hydroxyl groups to an ether, an ester, or other nonreactive group.

One suitable class of polyether monol starters or initially charged starters (Sᵢ) includes polyoxypropylene monols having a hydroxyl number of less than or equal to 80 mg KOH/g or of less than or equal to 56 mg KOH/g. These compounds facilitate DMC catalyzed addition of epoxide and provide suitable build ratios for the production of the *in-situ* formed polyether polyol blends herein. The polyoxypropylene monols used as the initially charged starter (Sᵢ) can be made using processes well known to the skilled artisan including processes defined in U.S. Patent 5,689,012, U.S. Patent 5,177,777, U.S. Patent 10,723,829, U.S. Patent 10,723,830 and U.S. Patent 10,738,155.

In the process of the present invention, the quantity of an initially charged starter (Sᵢ) used depends on many factors, including, for example, the reactor dimensions, the identity of the initially charged starter (Sᵢ), the equivalent weights of the initially charged starter (Sᵢ) and of the target product, the equivalent weight of the continuously added starter (S_{c}), and other factors.

Any DMC catalyst known in the art is suitable for use in the process of the present invention. These well-known catalysts are the reaction products of a water-soluble metal salt (e.g., zinc chloride) and a water-soluble metal cyanide salt (e.g., potassium hexacyanocobaltate). Preparation of suitable DMC catalysts is described in many references, including, for example, U.S. Patents 5,158,922, 4,477,589, 3,427,334, 3,941,849, 5,470,813, and 5,482,908, the disclosures of which are incorporated herein by reference. One suitable type of DMC catalyst is zinc hexacyanocobaltate.

The DMC catalyst includes an organic complexing agent. As disclosed in the preceding references, the complexing agent is needed for an active catalyst. Suitable complexing agents are water-soluble heteroatom-containing organic compounds that can complex with the DMC compound, as well as water-soluble aliphatic alcohols. An example of a suitable aliphatic alcohol is tert-butyl alcohol. The DMC catalyst may include, in addition to the organic complexing agent, a polyether, as is described in U.S. Patent 5,482,908.

Suitable DMC catalysts for use in the process are highly active catalysts such as those described in U.S. Patents 5,482,908 and 5,470,813. High activity allows the catalysts to be used at very low concentrations, and possibly at concentrations which are low enough to overcome any need to remove the catalyst from the finished blends of the *in-situ* formed polyether polyol blends.

The process of the invention also requires a continuously added starter (S_{c}) as described in detail herein. Conventional processes for making polyether polyols, including KOH-catalyzed and DMC-catalyzed processes, charges the catalyst and all the starter to be used to the reactor at the start of the polymerization, and then adds the epoxide continuously. In the process of forming an *in-situ* formed polyether polyol blend suitable for the invention, the DMC catalyst and an initial monofunctional starter (or initially charged starter) (Sᵢ) are charged to the reactor followed by epoxide feed and polymerization until the monol reaches the desired equivalent weight. At this point, a feed (i.e. as described in step IV)(2) above) of continuously added starter (S_{c}) is begun and it proceeds at a continuous controlled rate relative to the continuing epoxide feed until the addition of the feed of continuously added starter (S_{c}) is completed. Epoxide feed is continued until the desired hydroxyl number of the feed of continuously added starter (S_{c}) components is reached. The continuously added starter (S_{c}) may be mixed with the epoxide and added to the reactor, or it may be added to the reactor as a separate stream. It is also possible that DMC catalyst can be added continuously with the continuously added starter (S_{c}). The epoxide fed continuously with the continuously added starter (S_{c}) (as described in IV)(1) above) has a different epoxide composition (i.e., propylene oxide to ethylene oxide) than that which is fed during the polymerization of the initially charged starter (Sᵢ). In the process of the present invention to form the *in-situ* formed polyether polyol blend, a second block (i.e. as described in step VIII)(1) above) of epoxide is started after completion of the first epoxide block. The second block of epoxide is completed at a propylene oxide to ethylene oxide ratio that is the same as was used for the first block of epoxide, or it can be a different ratio. The selection of the type and number of compounds used as the continuously added starter (S_{c}) determines the type and number of polyether polyols formed in step X) above (i.e. polyether polyols formed in X)(1)(b) and X)(1)(c), etc.). The skilled artisan knows and understands that the lowest equivalent weight substance preferably reacts with alkylene oxide in the presence of DMC catalyst, hence the continuously added starter (S_{c}) will preferentially react with the alkylene oxide present. This is commonly known and referred to by one of ordinary skill in the art as "catch up kinetics". This allows the *in-situ* production of different components of the polyether polyol blend while only minimally affecting the other, higher equivalent weight components. Catch up kinetics is described in "Chemistry and Technology of Polyols for Polyurethanes", 2nd Edition, Volume 1, 2016, M. lonescu, pages 189-190,.

The continuously added starter (S_{c}) is typically a low equivalent weight starter or polyol or a blend of low equivalent weight starters or polyols. Low equivalent weight polyols as defined in this application have from 2 hydroxyl groups to 8 hydroxyl groups. It also may be beneficial to add more than one continuously added starter (S_{c}) having different functionalities either simultaneously or sequentially. The functionality of the continuously added starter (S_{c}) or multiple continuously added starters (S_{c}) should be chosen such that the average functionality of the resultant polyether polyol is from 2 to 6 or from 2 to 3. These low equivalent weight polyols may have at least 2 hydroxyl groups. These low equivalent weight polyols may also have 8 hydroxyl groups or less, 6 hydroxyl groups or less, or 3 hydroxyl groups or less. The low equivalent weight polyols used for the continuously added starter (S_{c}) may contain any number of hydroxyl groups which ranges between any combination of these upper and lower values, inclusive, such as 2 hydroxyl groups to 8 hydroxyl groups, or 2 hydroxyl groups to 6 hydroxyl groups, or 2 hydroxyl groups to 3 hydroxyl groups.

Suitable low equivalent weight polyols for the continuously added starter (S_{c}) for the intermediate of the polyether polyols (b) have a nominal functionality of 2, and an equivalent weight of 28 to 400. Suitable low equivalent weight polyols for the intermediate of the polyether polyols (c) have a nominal functionality of greater than 2 and up to 8, and an equivalent weight of 28 to 400.

Examples of suitable low equivalent weight polyols to be used as the continuously added starter (S_{c}) include compounds such as, for example, glycerin, propylene glycol, dipropylene glycol, ethylene glycol, trimethylolpropane, sucrose, sorbitol, tripropylene glycol, and the like, and mixtures thereof. In one embodiment, the continuously added starter (S_{c}) comprises propylene glycol and glycerin. Low equivalent weight polyether polyols prepared by multiple epoxide addition to these polyols or other starters with two or more active hydrogens may also be employed as the continuously added starter (S_{c}).

The continuously added starter (S_{c}) can also be other compounds having at least two active hydrogens per molecule, which are known to be suitable initiators for conventional DMC-catalyzed epoxide polymerizations, including compounds such as, for example, alcohols, thiols, aldehydes and ketones containing enolizable hydrogens, malonic esters, phenols, carboxylic acids and anhydrides, aromatic amines, acetylenes, and the like, and mixtures thereof. Examples of suitable active hydrogen-containing compounds appear in U.S. Patents 3,900,518, 3,941,849, and 4,472,560, the disclosures of which are incorporated herein by reference.

As described previously, a wide variety of epoxides can be employed in the current process. Propylene oxide and ethylene oxide are the most commonly used epoxides. A unique feature of the current process is that the compositions of the epoxide can be varied to control the composition of the monol initiated oxyalkylene ether (a), polyether polyol (b), and polyether polyol (c) in the final product. For example in the *in-situ* production of the polyether polyol blends, propylene oxide can be added alone during polymerization of the monol initiated oxyalkylene ether (a), prior to the start of the addition of the continuously added starter (S_{c}). After the feed of continuously added starter (S_{c}) is started, a blend of ethylene oxide and propylene oxide can be fed to yield a high functionality polyether polyol comprised of a poly(oxyethylene-oxypropylene) copolymer. Because oxide addition via DMC catalysis occurs predominantly on the lower equivalent weight polyether polyol, the monol initiated oxyalkylene ether component can remain largely poly(oxypropylene). By reversing these sequences, the monol initiated oxyalkylene ether could be produced with higher poly(oxyethylene) content and the polyether polyol (from the feed of continuously added starter (S_{c})) could be predominantly poly(oxypropylene.

The epoxide composition may also be varied during the initial polymerization of the monol initiated oxyalkylene ether and/or at some point during and/or after the addition of the continuously added starter (S_{c}). This provides flexibility for controlling the distribution of oxyethylene or oxypropylene within the monol initiated oxyalkylene ether and polyether polyols and allows some control of the primary versus secondary hydroxyl content of the monol initiated oxyalkylene ether and polyether polyols, and thus, the relative reactivity of the constituents in the final polyether polyol composition. In this way, it is possible to design the product to meet the reactivity and performance requirements of the intended applications such as viscoelastic polyurethane foams.

In the process of the present invention, the propylene oxide to ethylene oxide composition fed during the first oxide block of step IV)(1) above ranges from 78:22 to 45:55 weight % based on the total epoxide fed during the first oxide block. The propylene oxide to ethylene oxide composition fed during the second oxide block of step VIII)(1) above ranges from 90:10 to 50:50 weight % based on the total epoxide fed during the second oxide block.

The total alkylene oxide addition time can range from 30 minutes to 12 hours depending on the mixing of the reaction system and the heat removal capability of the reaction system. The alkylene oxide feed rates can remain constant during the feeding of alkylene oxide or one or more of the alkylene oxide feed rates can vary during the course of the alkylene oxide feed to provide improved reaction conditions (i.e., mixing, heat removal, etc) or improved product quality or optimized composition (i.e., increased EO composition by increasing the EO feed rate and decreasing or holding constant the PO feed rate).

In one embodiment, the polyether polyol blends herein and the *in-situ* formed polyether polyol blends herein are free of a polyether polyol having an OH number of 20 to 240, an average functionality of 2 to 8, and containing at least 50% by weight of copolymerized oxyethylene, based on 100% by weight of the polyether polyol.

The process for the production of a viscoelastic polyurethane foam comprises reacting (A) toluene diisocyanate, with (B) an isocyanate-reactive component comprising (1) the polyether polyol blends described herein having an overall functionality of greater than 2, an overall hydroxyl number of 56 mg KOH/g to 140 mg KOH/g, and having an overall content of copolymerized oxyethylene of 20% to 40% by weight, as described herein, in the presence of (C) a blowing agent, (D) a catalyst, and (E) a surfactant.

Component (A) comprises toluene diisocyanate. Any mixture of isomers of toluene diisocyanate is suitable, with a mixture comprising 65% to 100% (or 80%) of the 2,4-isomer and 0% to 35% (or 20%) of the 2,6-isomer being preferred. In one embodiment, toluene diisocyanate comprising 80% of the 2,4-isomer and 20% of the 2, 6 isomer is used.

The isocyanate-reactive component (B) comprises the polyether polyol blend (1) described herein which has an overall hydroxyl number of 56 mg KOH/g to 140 mg KOH/g, an overall functionality of greater than 2, and having an overall hydroxyl content of copolymerized oxyethylene of 20% to 40% by weight. This polyether polyol blend may have a hydroxyl number of at least 56 mg KOH/g or at least 80 mg KOH/g. This polyether polyol blend may also have a hydroxyl number of less than or equal to 140 mg KOH/g or less than or equal to 120 mg KOH/g. These polyether polyol blends may have a hydroxyl number ranging between any combination of these upper and lower values, inclusive, such as 56 to 140 mg OKH/g or 80 to 120mg KOH/g.

In the isocyanate-reactive component (B), the polyether polyol blend (1) also typically has an overall functionality of greater than 2. The overall functionality of this polyether polyol blend may also be 3 or less. The polyether polyol blend (1) may have an overall functionality ranging between any combination of these upper and lower values, inclusive, such as greater than 2 , or greater than 2 up to 3.

The composition of the polyether polyol blend (1) is as described hereinabove. The suitable polyether polyol blends may either be formed *in-situ* or by blending the individual components.

In addition to the polyether polyol blend (1), the isocyanate-reactive component (B) for the viscoelastic flexible polyurethane foams and process of preparing the viscoelastic flexible foams may additionally comprise a conventional polyether polyol, a polyester polyol, a polyether carbonate polyol, a polyetherester polyol, polymer polyols, polythioethers, polyacetals, polycarbonates, etc., as well as various low equivalent weight chain extenders and/or crosslinking agents, both of which may contain hydroxyl groups and/or amine groups capable of reacting with the isocyanate groups of the isocyanate component.

In addition, in the process of preparing the viscoelastic flexible polyurethane foam, the isocyanate-reactive component (B) which comprises (1) the polyether polyol blend described above may be free of a polyether polyol having an OH number of 20 to 240, an average functionality of 2 to 8, and containing at least 50% by weight of copolymerized oxyethylene, based on 100% by weight of the polyether polyol.

In one embodiment, a foam modifier or foam processing aid is added to the formulation to enhance processing and help stabilize the viscoelastic flexible foam against cold flow and/or dishing by providing dimensional stability against deformation and reduced settling of the viscoelastic flexible foam. These processing aids or modifiers are typically chain extenders and/or cross-linking agents.

In addition, the foam modifiers or processing aids may have a hydroxyl number of at least 300 mg KOH/g, or of at least 600 mg KOH/g.

Suitable blowing agents (C) for the present invention include, for example, chemical blowing agents, i.e. isocyanate reactive agents that generate blowing gases, such as for example water and formic acid and physical blowing agents such as acetone, carbon dioxide, chlorofluorocarbons, highly fluorinated and/or perfluorinated hydrocarbons, chlorinated hydrocarbons, aliphatic and/or cycloaliphatic hydrocarbons such as propane, butane, pentane, hexane, etc., or acetals such as methylal. These physical blowing agents are usually added to the polyol component of the system. However, they can also be added in the isocyanate component or as a combination of both the polyol component and the isocyanate component. It is also possible to use them together with highly fluorinated and/or perfluorinated hydrocarbons, in the form of an emulsion of the polyol component. If emulsifiers are used, they are usually oligomeric acrylates which contain polyoxyalkylene and fluoroalkane radicals bonded as side groups and have a fluorine content of 5 to 30% by weight. Such products are sufficiently well known from plastics chemistry, and are described in U.S. Patent 4,972,002.

The amount of blowing agent or blowing agent mixture used may range from 0.5 to 20% by weight, based on 100% by weight of (B) the isocyanate-reactive component. As used herein with respect to the amount of blowing agent, the isocyanate-reactive component includes (1) the polyether polyol blend described herein. In some instances, the amount of blowing agent present may be at least 0.5% or at least 0.75% by weight, based on 100% by weight of component (B). The amount of blowing agent present may also be 20% or less, or 10% by weight or less, based on 100% by weight of component (B). The blowing agent may be present in any amount ranging between any combination of these upper and lower above values, inclusive, such as 0.5% to 20% or 0.75% to 10% by weight, based on 100% by weight of component (B).

When water is the blowing agent, the amount of water typically present can range from 0.5 to 10% by weight, based on 100% by weight of component (B) the isocyanate-reactive component. In some instances, the amount of blowing agent present may be at least 0.5% or at least 0.75% by weight, based on 100% by weight of component (B). The amount of water present as a blowing agent may also be 10% or less, or 7% by weight or less, based on 100% by weight of component (B). The blowing agent may be present in any amount ranging between any combination of these upper and lower values, inclusive, such as 0.5% to 10% or 0.75% to 7% by weight, based on 100% by weight of component (B). The addition of water can be effected in combination with the use of the other blowing agents described. In accordance with the present invention, water is the preferred blowing agent. Also, preferred is the use of water along with pressurized carbon dioxide that is dispersed in the polyol or resin blend and frothed by passing through a pressure let down device such as employed for example in the Henecke Novaflex, CarDio (Cannon Viking Limited) and Beamech (CO₂) machines, which are known by those skilled in the art.

The viscoelastic flexible foam is produced in the presence of a surfactant, which helps to stabilize the viscoelastic flexible foam until it cures. Suitable surfactants are those well known in the polyurethane industry. A wide variety of organosilicone surfactants are commercially available. Examples of suitable surfactants are Niax L-620 surfactant, a product of Momentive Performance Materials, and Tegostab B8244, a product of Evonik-Goldschmidt. Many other silicone surfactants known to those in the art may be substituted for these suitable silicones. The surfactant is typically used in an amount within the range of at least 0.1 to 4 parts by weight, based on 100% by weight of component (B). The surfactant may be present in amounts ranging from at least 0.1, or at least 0.2 parts by weight, based on 100% by weight of component (B).

The surfactant may be also present in amounts ranging from 4 parts by weight or less, or 3 parts by weight or less, based on 100% by weight of component (B). The amount of surfactant may range between any combination of these upper and lower values, inclusive, such as 0.1 to 4 parts by weight or 0.2 to 3 parts by weight, based on 100% by weight of component (B).

At least one polyurethane catalyst is required to catalyze the reactions of the isocyanate-reactive components and water with the polyisocyanate. It is common to use both an organoamine and an organotin compound for this purpose. Suitable polyurethane catalysts are well known in the art; an extensive list appears in U.S. Patent 5,011,908. Suitable organotin catalysts include tin salts and dialkyltin salts of carboxylic acids. Examples include stannous octoate, dibutyltin dilaurate, dibutyltin diacetate, stannous oleate, and the like. Stannous octoate is particularly preferred. Preferred organoamine catalysts are tertiary amines such as trimethylamine, triethylamine, triethylenediamine, bis(2,2'-dimethyl-amino)ethyl ether, N-ethylmorpholine, diethylenetriamine, and the like.

The polyurethane catalysts are typically used in an amount within the range of 0.01 to 3 parts by weight, based on 100% by weight of component (B). The polyurethane catalysts may be present in amounts of at least 0.01 by weight by or at least 0.1 parts by weight, based on 100% by weight of component (B). The polyurethane catalysts may be present in amounts of 3 parts by weight or less or 2 parts by weight or less, based on 100% by weight of component (B). The polyurethane catalysts may be present in any amount ranging between any combination of these upper and lower values, inclusive, such as 0.01 to 3 parts by weight, or at 0.1 to 2 parts by weight, based on 100% by weight of component (B).

Flame retardants, antioxidants, pigments, dyes, liquid and solid fillers, and many other commercial additives can also be included in the viscoelastic flexible foams in conventional amounts.

The viscoelastic foams of the invention comprise the reaction product of (A) toluene diisocyanate with (B) an isocyanate-reactive component comprising (1) the polyether polyol blend described herein, in the presence of (C) a blowing agent, (D) a catalyst, and (E) a surfactant. Suitable components for these foams are as described hereinabove.

The viscoelastic flexible foams are prepared using methods that are well known in the industry. These methods may include continuous or discontinuous free-rise slabstock foam processes and molded foam processes. In a typical slabstock process, the isocyanate is continuously mixed together with the other formulation chemicals by passing through a mixing head and then into a trough which overflows onto a moving conveyor.

Alternatively, the reacting mixture is deposited directly onto the moving conveyor. In another embodiment, high pressure liquid carbon dioxide is fed into one or more of the formulation components, typically the polyol, entering into the mixing head and the resin blend is passed through a frothing device where the pressure is let down and the resultant froth is deposited onto the conveyor. The viscoelastic flexible foam expands and rises as it moves down the conveyor to form a continuous foam slab that is cut into blocks or buns of the desired length for curing and storage. After curing for one or more days, these foam buns can be cut into the desired shapes for the end-use applications. In the discontinuous process, the reactants are quickly mixed together through a head or in a large mixing chamber. The reaction mixture is then deposited into a large box or other suitable container where foam expansion occurs to form a bun of the lateral dimensions of the container.

A typical molded viscoelastic flexible foam process usually employs a one-shot approach in which a specific amount of the isocyanate stream (the "A" side) is rapidly combined and mixed with a specific amount of the remaining formulation components (the "B" side). An additional stream may be employed to bring in one or more specific components not included with the "B" side stream. The mixture is quickly deposited into a mold that is then closed. The viscoelastic flexible foam expands to fill the mold and produce a part with the shape and dimensions of the mold.

Although less preferred, an isocyanate-terminated prepolymer approach to making the viscoelastic flexible foams can also be used. In this approach, a significant portion of the isocyanate-reactive mixture is reacted with the polyisocyanate, and the resulting isocyanate-terminated prepolymer is then reacted with the remaining components.

As used and referred to throughout the specification, air flow is measured in accordance with the NOPCO test procedure described by R.E. Jones and G. Fesman, "Journal of Cellular Plastics," January, 1965,Vol. No. 1, pp. 200-216, using a Amscor Model 1377 automated foam porosity tester. A 5.08 cm x 5.08 cmx 2.54 cm inch piece of foam is cut from near the center of the test specimens which itself is cut from the foam blocks after production. Air flow, expressed as cubic meter per minute , is measured through the 2.54 cm thickness at a pressure differential of 1.27 cm of water less than atmospheric pressure. The air flow is in the direction of rise of the foam.

The test used to define foam recovery rate from deformation is the 95% height recovery time as described in ASTM D3574-17. A recovery rate of less than 3 seconds, indicates a fast recovering foam such as observed for resilient foam types. A recovery rate of greater than or equal to 3 seconds is indicative of a slow recovery foam often referred to as "viscoelastic" or "memory" foam.

Other viscoelastic flexible foam physical properties reported in the examples were measured per the standard procedures described in ASTM D3574-17 having the title "Standard Test Methods for Flexible Cellular Materials-Slab, Bonded, and Molded Urethane Foams".

Commercial production of viscoelastic flexible foams involves mixing together a suitable polyisocyanate, and an isocyanate-reactive component which comprises the polyether polyol blend described above, in the presence of a blowing agent, a surfactant, a catalyst, and optionally, various other compounds which are known in the field of polyurethane chemistry to be suitable for preparing viscoelastic flexible foams.

Those skilled in the art will readily understand that known variations of the conditions of the following procedures can be used. Unless otherwise noted, all temperatures are degrees Celsius and all parts and percentages are parts by weight and percentages by weight, respectively.

### EXAMPLES

Test Methods: The physical properties reported herein were measured per the standard procedures described in ASTM D3574-17 having the title "Standard Test Methods for Flexible Cellular Materials-Slab, Bonded, and Molded Urethane Foams" unless otherwise stated.

Hydroxyl Numbers:The hydroxyl numbers were determined in accordance with ASTM D-4274-11, and are reported in mg KOH/g polyol.

Viscosity: The viscosities of the polyether polyols were determined at 25°C using an Anton Paar SVM 3000/G2 Stabinger Viscometer.

Other foam physical properties reported herein were measured per the standard procedures described in ASTM D3574-17.

As used herein, "pphp" represents parts per hundred parts polyol.

The following materials were used in the working examples:
The following materials were used in the working examples:

| | |
|---|---|
| Isocyanate A: | toluene diisocyanate having 80% of 2,4-isomer and 20% of 2,6-isomer |
| Polyether Polyol A: | An *in-situ* formed multifunctional polyether polyol prepared by alkoxylating a monol, diol, and triol with a DMC catalyst following the procedure described in U.S Patent 6,491,846. The starter comprises a 1600 MW (35 OH#) monol made from the propoxylation of Neodol 25. 3390 g of this 1600 MW monol are alkoxylated with 3287 g of a mixture of propylene oxide and ethylene oxide in a weight ratio of 82/18 to a hydroxyl number of about 17.8 mg KOH/g. The alkoxide mixture was charged at a combined feed rate of 60.26 g/min. The resulting 17.8 hydroxyl number monol contains a total of 8.5% ethylene oxide. Next, a mixture of 1107 g glycerin and propylene glycol in a 62.3 to 37.7 wt% ratio was continuously added at a combined feed rate of 7.91 g/min along with mixture of 8437 g propylene oxide and ethylene oxide in a weight ratio of 82/18 until a hydroxyl number of about 123 was reached. The alkoxide mixture was charged at a combined feed rate of 60.26 g/min. At this point, the propylene glycol and glycerin feeds were stopped and an additional 441 g of the propylene oxide and ethylene oxide mixture were continuously added until a hydroxyl number of about 120 was reached. At this point the reactor contains a mixture of the previously mentioned 17.8 hydroxyl number monol, a diol intermediate with a hydroxyl number of 187 mg KOH/g and a triol intermediate with a hydroxyl number of 187 mg KOH/g. At this point 3333 g of a mixture of propylene oxide and ethylene oxide were continuously added in a weight ratio of 55/45 at a combined feed rate of 60.26 g/min until the hydroxyl number of the diol and triol components reached about 140 mg KOH/g. The diol and triol components each contain 16 % ethylene |
| | oxide in the first block, based on the weight of the polyether polyol at the end of the first oxide block, and 45% ethylene oxide in the second oxide block, based on the weight of the second oxide block. This *in-situ* formed polyether polyol blend contains 33 weight % monol, 22 weight % diol and 45 weight % triol. The *in-situ* formed polyether polyol blend had an overall functionality of about 2.4, total ethylene oxide content of 18.5% and an overall hydroxyl number of about 100. |
| Polyether Polyol B: | An *in-situ* formed multifunctional polyether polyol blend prepared by alkoxylating a monol, diol, and triol with a DMC catalyst following the procedure described herein. The starter comprises a 1600 MW (35 OH#) monol made from the propoxylation of Neodol 25. 3390 g of this 1600 MW monol are alkoxylated with 3287 g of a mixture of propylene oxide and ethylene oxide in a weight ratio of 82/18 to a hydroxyl number of about 17.8 mg KOH/g. The alkoxide mixture was charged at a combined feed rate of 60.26 g/min. The resulting 17.8 hydroxyl number monol contains a total of 8.5% ethylene oxide. Next, a mixture of 1107 g glycerin and propylene glycol in a 62.3 to 37.7 wt% ratio was continuously added at a combined feed rate of 7.91 g/min along with mixture of 8437 g propylene oxide and ethylene oxide in a weight ratio of 60.6/39.4 until a hydroxyl number of about 123 was reached. The alkoxide mixture was charged at a combined feed rate of 60.26 g/min. At this point, the propylene glycol and glycerin feeds were stopped and an additional 441 g of the propylene oxide and ethylene oxide mixture were continuously added until a hydroxyl number of about 120 was reached. At this point the reactor contains a mixture of the previously mentioned 17.8 hydroxyl number monol, a diol intermediate with a hydroxyl number of 187 mg KOH/g and a triol intermediate with a hydroxyl number of 187 mg KOH/g. At this point 3333 g of a mixture of propylene oxide and ethylene oxide were continuously added in a weight ratio of 68.5/31.5 at a combined feed |
| | rate of 60.26 g/min until the hydroxyl number of the diol and triol components reached about 140 mg KOH/g. The diol and triol components each contain 35 % ethylene oxide in the first block, based on the weight of the polyether polyol at the end of the first oxide block, and 31.5% ethylene oxide in the second oxide block, based on the weight of the second oxide block. This *in-situ* formed polyether polyol blend contains 33 weight % monol, 22 weight % diol and 45 weight % triol. The *in-situ* formed polyether polyol blend had an overall functionality of about 2.4, total ethylene oxide content of 25.5% and an overall hydroxyl number of about 100. |
| Polyether Polyol C: | An *in-situ* formed multifunctional polyether polyol prepared by alkoxylating a monol, diol, and triol with a DMC catalyst with the following procedure. The starter comprises a 1600 MW (35 OH#) monol made from the propoxylation of Neodol 25. 3390 g of this 1600 MW monol are alkoxylated with 3287 g of a mixture of propylene oxide and ethylene oxide in a weight ratio of 30/70 to a hydroxyl number of about 17.8 mg KOH/g. The alkoxide mixture was charged at a combined feed rate of 60.26 g/min. The resulting 17.8 hydroxyl number monol contains a total of 33.3% ethylene oxide. Next, a mixture of 1107 g glycerin and propylene glycol in a 62.3 to 37.7 wt% ratio was continuously added at a combined feed rate of 7.91 g/min along with mixture of 8437 g propylene oxide and ethylene oxide in a weight ratio of 82/18 until a hydroxyl number of about 123 was reached. The alkoxide mixture was charged at a combined feed rate of 60.26 g/min. At this point, the propylene glycol and glycerin feeds were stopped and an additional 441 g of the propylene oxide and ethylene oxide mixture were continuously added until a hydroxyl number of about 120 was reached. At this point the reactor contains a mixture of the previously mentioned 17.8 hydroxyl number monol, a diol intermediate with a hydroxyl number of 187 mg KOH/g and a triol |
| | intermediate with a hydroxyl number of 187 mg KOH/g. At this point 3333 g of a mixture of propylene oxide and ethylene oxide were continuously added in a weight ratio of 55/45 at a combined feed rate of 60.26 g/min until the hydroxyl number of the diol and triol components reached about 140 mg KOH/g. The diol and triol components each contain 16 % ethylene oxide in the first block, based on the weight of the polyether polyol at the end of the first oxide block, and 45% ethylene oxide in the second oxide block, based on the weight of the second oxide block. This *in-situ* formed polyether polyol blend contains 33 weight % monol, 22 weight % diol and 45 weight % triol. The *in-situ* formed polyether polyol blend had an overall functionality of about 2.4, total ethylene oxide content of 26.6% and an overall hydroxyl number of about 100. |
| Polyether Polyol D: | An *in-situ* formed multifunctional polyether polyol prepared by alkoxylating a monol, diol, and triol with a DMC catalyst following the procedure described herein. The starter comprises a 1600 MW (35 OH#) monol made from the propoxylation of Neodol 25. 3390 g of this 1600 MW monol are alkoxylated with 3287 g of a mixture of propylene oxide and ethylene oxide in a weight ratio of 82/18 to a hydroxyl number of about 17.8 mg KOH/g. The alkoxide mixture was charged at a combined feed rate of 60.26 g/min. The resulting 17.8 hydroxyl number monol contains a total of 8.5% ethylene oxide. Next, a mixture of 1107 g glycerin and propylene glycol in a 62.3 to 37.7 wt% ratio was continuously added at a combined feed rate of 7.91 g/min along with mixture of 8437 g propylene oxide and ethylene oxide in a weight ratio of 55/45 until a hydroxyl number of about 123 was reached. The alkoxide mixture was charged at a combined feed rate of 60.26 g/min. At this point, the propylene glycol and glycerin feeds were stopped and an additional 441 g of the propylene oxide and ethylene oxide mixture were continuously added until a hydroxyl number of about 120 |
| | was reached. At this point the reactor contains a mixture of the previously mentioned 17.8 hydroxyl number monol, a diol intermediate with a hydroxyl number of 187 mg KOH/g and a triol intermediate with a hydroxyl number of 187 mg KOH/g. At this point 3333 g of a mixture of propylene oxide and ethylene oxide were continuously added in a weight ratio of 55/45 at a combined feed rate of 60.26 g/min until the hydroxyl number of the diol and triol components reached about 140 mg KOH/g. The diol and triol components each contain 40 % ethylene oxide in the first block, based on the weight of the polyether polyol at the end of the first oxide block, and 45% ethylene oxide in the second oxide block, based on the weight of the second oxide block. This *in-situ* formed polyether polyol blend contains 33 weight % monol, 22 weight % diol and 45 weight % triol. The *in-situ* formed polyether polyol blend had an overall functionality of about 2.4, total ethylene oxide content of 30.3% and an overall hydroxyl number of about 100. |
| Polyol E: | A glycerin started poly(oxypropyleneoxyethylene) polyol having a hydroxyl number of about 37, and containing about 73% of copolymerized oxyethylene |
| Polyol F: | A glycerin starter poly(oxypropylene) polyol having a hydroxyl number of about 168 |
| Foam Modifier A: | A foam modifier having a hydroxyl number of about 1240 mg KOH/g polyol, commercially available from Momentive Performance Materials as Arcol DP-1022 |
| Foam Modifier A: | A delayed action crosslinking agent available from Evonik Industries as Ortegol 204 |
| Surfactant A: | A silicone surfactant commercially available from Momentive Performance Materials as Niax L-618 |
| Catalyst A: | An amine catalyst, commercially available from Momentive Performance Materials as Niax A-33 |
| Catalyst B: | An amine catalyst, commercially available from Momentive Performance Materials as Niax A-1 |
| Catalyst C: | Tin octoate, commercially available from Evonik as Dabco T-9 |
| Isocyanate A: | Toluene diisocyanate having 80% of the 2,4 isomer and 20% of the 2,6 isomer |

The free-rise bench scale foams of Table 1 were prepared using the following procedure. The polyether polyols, water, silicone surfactants, amine catalysts, and any other non-isocyanate additives were added to a cylindrical container fitted with baffles. The contents were mixed at 2400 rpm for 60 seconds with an agitator having two turbine impellers. Tin Catalyst C, if employed, was added at this time. The mixture was then degassed for 15 seconds. After degassing, the contents were mixed at 2400 rpm for 15 seconds, during which period the isocyanate was added when about 10 seconds of mixing time remained. The mixture was then poured into a 14 x 14 x 6-inch (35.56 x 35.56 x 15.24 cm) cardboard box, where it rose freely until the reaction was complete. A batch size sufficient to give a bun at least about 6 inches (15.24 cm) high was employed. The freshly prepared bun was cured for 20 minutes in an oven at 120°C and then allowed to cure at ambient conditions for a minimum of 1 day. Observations made during foaming and curing are set forth in the Tables. The buns were then trimmed to 30.48 x 30.48 x 10,16 cm and were roller crushed 3 times to a minimum thickness of about 2.54 cm. These samples were then conditioned for at least 16 hours at standard temperature (~23°C) and humidity (~50%) before being tested.

**Table 1: Polyether Polyol Compositions:**

| **Polyether Polyol** | **Polyether Polyol A** | **Polyether Polyol B** | **Polyether Polyol C** | **Polyether Polyol D** |
|---|---|---|---|---|
| EO/PO ratio in (a) monol oxide cofeed | 18/82 | 18/82 | 70/30 | 18/82 |
| % EO in (a) monol (based on total weight) | 8.5% | 8.5% | 33.3% | 8.5% |
| EO/PO ratio in first block oxide cofeed | 18/82 | 39.4/60.6 | 18/82 | 45/55 |
| % EO in Diol and Triol Intermediate (based on weight at end of first oxide block) | 16 | 35 | 16 | 40 |
| EO/PO ratio in the second block | 45/55 | 31.5/68.5 | 45/55 | 45/55 |
| % EO in in the second block (based on oxide weight fed) | 45 | 31.5 | 45 | 45 |
| Total % EO in (b) and (c) (based on total weight of (b) and (c)) | 23 | 34 | 45 | 45 |
| Total % EO in Polyether Polyol blend (include EO in monol) (based on total weight of polyether polyol blend, i.e. (a), (b) and (c)) | 18.5 | 25.5 | 26.6 | 30.3 |

**Table 2A: Foam Formulations:**

| **Isocyanate-Reactive Component** | **Example 1** (Comparative) | **Example 2** | **Example 3** (Comparative) | **Example 4** |
|---|---|---|---|---|
| Polyether Polyol A | 100 | | | |
| Polyether Polyol B | | 100 | | |
| Polyether Polyol C | | | 100 | |
| Polyether Polyol D | | | | 100 |
| Surfactant A | 0.5 | 0.5 | 0.5 | 0.5 |
| Foam Modifier A | | | | |
| Water (distilled) | 1.25 | 1.25 | 1.25 | 1.25 |
| Catalyst A (Niax A-33) | 0.60 | 0.60 | 0.60 | 0.60 |
| Catalyst B (Niax A-1) | 0.03 | 0.03 | 0.03 | 0.03 |
| Catalyst C (Dabco T-9) | 0.03 | 0.03 | 0.03 | 0.03 |
| | | | | |

| **A-Side (Isocyanate)** | | | | |
|---|---|---|---|---|
| Isocyanate A | 26.69 | 26.58 | 26.58 | 26.3 |
| | | | | |
| Isocyanate Index | 95 | 95 | 95 | 95 |

**Table 2B: Foam Formulations**

| **Isocyanate-Reactive Component** | Example 5 (Comparative) | Example 6 (Comparative) | Example 7 (Comparative) | Example 8 |
|---|---|---|---|---|
| Polyether Polyol A | 83.00 | | | |
| Polyether Polyol C | | 83.00 | | |
| Polyether Polyol D | | | 83.00 | 90.00 |
| Polyol E | 7.00 | 7.00 | 7.00 | |
| Polyol F | 10.00 | 10.00 | 10.00 | 10.00 |
| Surfactant A | 0.8 | 0.8 | 0.8 | 0.8 |
| Foam Modifier A | 1.50 | 1.50 | 1.50 | 1.50 |
| Foam Modifier B | 0.60 | 0.60 | 0.60 | 0.60 |
| Water (distilled) | 1.10 | 1.10 | 1.10 | 1.10 |
| Catalyst A | 0.58 | 0.58 | 0.58 | 0.58 |
| Catalyst B | 0.07 | 0.07 | 0.07 | 0.07 |
| Catalyst C | 0.03 | 0.03 | 0.03 | 0.03 |
| | | | | |

| **A-Side (Isocyanate)** | | | | |
|---|---|---|---|---|
| Isocyanate A | 32.16 | 32.05 | 31.81 | 32.47 |
| | | | | |
| Isocyanate Index | 100.00 | 100.00 | 100.00 | 100.00 |

**Table 3A: Foam Properties**

| **Physical Properties** | **Units** | **Example 1** (Comparative) | **Example 2** | **Example 3** (Comparative) | **Example 4** |
|---|---|---|---|---|---|
| Density | kg/m³ (lb/ft³) | 61.23 (3.82) | 61.72 (3.85) | 63.32 (3.95) | 65.08 (4.06) |
| Airflow | m³/min (ft³/min) | 0.07 (2.62) | 0.14 (4.85) | 0.04 (1.54) | 0.20 (7.03) |
| IFD Thickness | cm (in) | 10.24 (4.03) | 10.19 (4.01) | 9.96 (3.92) | 10.21 (4.02) |
| IFD 25% | N (lbf) | 50.92 (11.46) | 38.65 (8.70) | 50.47 (11.36) | 22.7 (5.11) |
| IFD 65% | N (lbf) | 109.88 (24.73) | 84.02 (18.91) | 119.29 (26.85) | 52.43 (11.80) |
| IFD 25% Return | N (lbf) | 42.12 (9.48) | 34.34 (7.73) | 42.56 (9.58) | 20.22 (4.55) |
| Return Val. 25% | % | 82.68 | 88.84 | 84.33 | 89.04 |
| S.F. 65%/25% | NA | 2.16 | 2.18 | 2.37 | 2.31 |
| Tensile Strength | kPa (psi) | 34.60 (5.02) | 42.19 (6.12) | 30.33 (4.40) | 31.36 (4.55) |
| Elongation | % | 174.60 | 211.15 | 148.60 | 167.45 |
| Tear Strength (20"/MIN-STDSP1) | N/m (pli) | 133.14 (0.76) | 159.41(0.91) | 92.84 (0.53) | 145.40 (0.83) |
| 75% Compression Set | % | 6.25 | 2.32 | 14.89 | 2.17 |
| 90% Compression Set | % | 81.07 | 3.03 | 76.75 | 3.03 |
| 75% HACS | % | 7.55 | 4.52 | 17.07 | 7.82 |
| Resilience (Ball Rebound) | % | 5.80 | 10.80 | 11.80 | 12.50 |
| 50% Wet Set | % | 3.83 | 1.25 | 2.48 | 1.32 |
| 75% Wet Set | % | 4.78 | 1.55 | 0.85 | 1.92 |
| 90% Wet Set | % | 4.32 | 1.28 | 4.22 | 0.80 |

**Table 3B Foam Properties**

| | | | | |
|---|---|---|---|---|
| **Physical Properties** | **Units** | **Example 5** (Comparative) | **Example 7** (Comparative) | **Example 8** |
| Density | kg/m³ (lb/ft³) | 60.91 (3.80) | 64.12 (4.00) | 62.36 (3.89) |
| Airflow | m³/min (ft³/min) | 0.12 (4.08) | 0.20 (7.21) | 0.18 (6.32) |
| IFD Thickness | cm (in) | 10.52 (4.14) | 10.59 (4.17) | 10.06 (3.96) |
| IFD 25% | N (lbf) | 51.09 (11.50) | 30.75 (6.92) | 32.63 (7.35) |
| IFD 65% | N (lbf) | 112.94 (25.42) | 72.78 (16.38) | 74.64 (16.80) |
| IFD 25% Return | N (lbf) | 46.96 (10.57) | 29.15 (6.56) | 31.08 (7.00) |
| Return Val. 25% | % | 91.96 | 94.73 | 95.24 |
| S.F. 65%/25% | NA | 2.21 | 2.37 | 2.29 |
| Tensile Strength | kPa (psi) | 59.14 (8.58) | 73.20 (10.62) | 66.97 (9.72) |
| Elongation | % | 225.90 | 273.75 | 273.05 |
| Tear Strength (20"/MIN-STDSP1) | N/m (pli) | 185.69 (1.06) | 218.97 (1.25) | 219.85 (1.26) |
| 75% Compression Set | % | 1.77 | 0.75 | 1.18 |
| 90% Compression Set | % | 1.78 | 1.27 | 1.12 |
| 75% HACS | % | 1.22 | 4.13 | 1.32 |
| Resilience (Ball Rebound) | % | 3.60 | 6.40 | 4.00 |
| 50% Wet Set | % | 0.95 | 0.28 | 0.10 |
| 75% Wet Set | % | 0.93 | 0.05 | 0.10 |
| 90% Wet Set | % | 1.12 | 0.25 | 0.18 |

| | | | | |
|---|---|---|---|---|
| * Foams made from Polyether Polyol C using the formulation in Example 6 (Comparative) could not be tested due to the foam shrinking. Examples 5, 7 and 8 demonstrate that the increased amount of ethylene oxide in the first oxide block of polyether polyol (b) and of polyether polyol (c) is necessary to achieve good results and to eliminate the need for an additional polyether polyol that contains a high ethylene oxide content in the foam formulation. | | | | |

## Claims

1. A polyether polyol blend having an overall hydroxyl number of 56 mg KOH/g to 140 mg KOH/g, an overall functionality of greater than 2, and an overall content of copolymerized oxyethylene of 20% to 40% by weight, comprising:
(a) a monol initiated oxyalkylene ether having a hydroxyl number of less than or equal to 56 mg KOH/g, and containing less than or equal to 20% of copolymerized oxyethylene, based on the total weight of the monol initiated oxyalkylene ether (a);
(b) a polyether polyol having a hydroxyl number of 47 mg KOH/g polyol to 300 mg KOH/g polyol, and a nominal functionality of 2, in which the polyether polyol comprises a first oxide block having 20% to 50% of copolymerized oxyethylene, based on the weight of the polyether polyol at the end of the first oxide block, and a second oxide block comprising 10 to 50% by weight of copolymerized oxyethylene, based on the weight of the second oxide block; and
(c) a polyether polyol having a hydroxyl number of 47 mg KOH/g polyol to 300 mg KOH/g polyol, and a nominal functionality of greater than 2 and up to 8, in which the polyether polyol comprises a first oxide block having 20% to 50% by weight of copolymerized oxyethylene, based on the weight of the polyether polyol at the end of the first oxide block, and a second oxide block comprising 10% to 50% of copolymerized oxyethylene, based on the weight of the second oxide block;
wherein the polyether polyol blend comprises: (i) 20% to 50% by weight of (a) the monol initiated oxyalkylene ether, and (ii) 80% to 50% of polyethers (b) and (c), with the sum of the %'s by weight of (i) and (ii) totaling 100% by weight of the polyether polyol blend, and
wherein (ii) the 80 to 50% by weight of polyether polyols (b) and (c) comprises polyether polyol (b) in an amount of 10 to 90% by weight and polyether polyol (c) in an amount of 90 to 10% by weight.

2. The polyether polyol blend of claim 1, wherein the overall hydroxyl number is 80 mg KOH/g to 120 mg KOH/g and the overall functionality is greater than 2 and up to 3.

3. The polyether polyol blend of claim 1 or claim 2, wherein (a) the monol initiated oxyalkylene ether has a hydroxyl number of less than or equal to 28 mg KOH/g and contains 2 to 15% by weight of copolymerized oxyethylene, based on the total weight of the monol initiated oxyalkylene ether (a).

4. The polyether polyol blend of one of claim 1 to claim 3, wherein (b) said polyether polyol has a hydroxyl number of 70 to 240 mg KOH/g, and comprises 25% to 45% by weight of copolymerized oxyethylene in the first oxide block based on the weight of the polyether polyol at the end of the first oxide block, and 15% to 45% by weight of copolymerized oxyethylene in the second oxide block based on the weight of the second oxide block and wherein (c) said polyether polyol has a hydroxyl number of 70 to 240 mg KOH/g, a nominal functionality of 3 to 6, and comprises 25% to 45% by weight of copolymerized oxyethylene in the first oxide block based on the weight of the polyether polyol at the end of the first oxide block, and 15% to 45% by weight of copolymerized oxyethylene in the second oxide block based on the weight of the second oxide block.

5. The polyether polyol blend of one of claim 1 to claim 4, wherein the first oxide block of (b) said polyether polyol is formed by the copolymerization of ethylene oxide and propylene oxide in the presence of a low equivalent weight starter having a nominal functionality of 2 and wherein the first oxide block of (c) said polyether polyol is formed by the copolymerization of ethylene oxide and propylene oxide in the presence of a low equivalent weight starter having a nominal functionality of greater than 2 and up to 8.

6. The polyether polyol blend of one of claim 1 to claim 5, which comprises (i) 25 to 40% by weight of (a) said monol initiated oxyalkylene ether, and (ii) 75 to 60% by weight of polyether polyols (b) and (c), wherein the 75 to 60% by weight of polyether polyols (b) and (c) comprises polyether polyol (b) in an amount of 30 to 70% by weight, and polyether polyol (c) in an amount of 70 to 30% by weight.

7. The polyether polyol blend of one of claim 1 to claim 6, wherein the second oxide block of the polyether polyol (b) or of the polyether polyol (c) comprises copolymerized oxyethylene in an amount of at least 20% to 45% by weight, based on the weight of the second oxide block.

8. The polyether polyol blend of one of claim 1 to claim 7, which is free of a polyether polyol having a hydroxyl number of 20 to 240 mg KOH/g, an average functionality of 2 to 8, and which contains at least 50% by weight of copolymerized oxyethylene, based on 100% by weight of the polyether polyol.

9. A process for preparing the polyether polyol blend of one of claim 1 to claim 8, comprising blending:
(a) monol initiated oxyalkylene ether having a hydroxyl number of less than or equal to 56 mg KOH/g, and containing less than or equal to 20% by weight of copolymerized oxyethylene, based on the total weight of the monol initiated oxyalkylene ether (a);
(b) a polyether polyol having a hydroxyl number of 47 mg KOH/g to 300 mg KOH/g, and a nominal functionality of 2, with the polyether polyol comprising a first oxide block containing 20 to 50% by weight of copolymerized oxyethylene, based on the weight of the polyether polyol at the end of the first oxide block, and a second oxide block comprising 10 to 50% by weight of copolymerized oxyethylene, based on the weight of the second oxide block; and
(c) a polyether polyol having a hydroxyl number of 47 mg KOH/g to 300 mg KOH/g, and a nominal functionality of greater than 2 and up to 8, with the polyether polyol comprising a first oxide block having 20 to 50% by weight of copolymerized oxyethylene, based on the weight of the polyether polyol at the end of the first oxide block, and a second oxide block comprising 10 to 50% by weight of copolymerized oxyethylene, based on the weight of the second oxide block;
wherein the polyether polyol blend comprises (i) 20 to 50% by weight of (a) the monol initiated oxyalkylene ether and (ii) 80 to 50% by weight of polyether polyols (b) and (c), with the sum of the %'s by weight of (i) and (ii) totaling 100% by weight of the polyether polyol blend, and
wherein (ii) the 80 to 50% by weight of polyether polyols (b) and (c) comprises polyether polyol (b) in an amount of 10 to 90% by weight and polyether polyol (c) in an amount of 90 to 10% by weight.

10. A process of preparing the polyether polyol blend of one of claim 1 to claim 8, comprising:
I) introducing into a reaction vessel a mixture comprising:
(1) an initially charged starter (Si) comprising a monofunctional compound having a hydroxyl number of less than or equal to 80 mg KOH/g, and
(2) a double metal cyanide catalyst;
II) feeding an epoxide comprising propylene oxide and ethylene oxide in a weight ratio of 100:0 to 80:20, into the reaction vessel;
III) allowing the epoxide and the initially charged starter (Si) to react and to polymerize by feeding the epoxide until the equivalent weight of the monofunctional compound is increased by at least 10% by weight and reaches a value between 1,500 and 6,000;
IV) feeding an epoxide comprising propylene oxide and ethylene oxide in a weight ratio of 78:22 to 45:55; while continuously adding a continuously added starter (Sc) having a nominal functionality of greater than 2 to 6, and an equivalent weight of 28 to 400, into the reaction vessel while continuing to feed epoxide;
V) completing addition of the continuously added starter (Sc);
VI) feeding an epoxide comprising propylene oxide and ethylene oxide fed at the same ratio as IV) (1) to fully react all the continuously added starter (Sc);
VII) allowing the mixture to continue to polymerize in the reaction vessel thereby forming at least two polyether polyols with a first alkylene oxide block added to the continuously added starter (Sc) having 20 to 50% by weight of copolymerized oxyethylene, based on the weight of the amounts of epoxide added in IV)(1), of continuously added starter (Sc) added in IV)(2), and of epoxide added in VI)(1); and
VIII) feeding an epoxide comprising propylene oxide and ethylene oxide;
IX) allowing the mixture to continue to polymerize in the reaction vessel thereby forming at least two polyether polyols with a first alkylene oxide block added to the continuously added starter (Sc) having 20 to 50% by weight of copolymerized oxyethylene, based on the weight of the amounts of epoxide added in IV)(1), of continuously added starter (Sc) added in IV)(2), and of epoxide added in VI)(1), and a second oxide block comprising 10 to 50% by weight of copolymerized oxyethylene, based on the weight of epoxide added in VIII)(1).

11. The process of claim 10, wherein:
(i) step VII) forms from 2 to 4 polyether polyols, preferably 2 polyether polyols, with a first alkylene oxide block added to the continuously added starter (Sc) having 20 to 50% by weight of copolymerized oxyethylene, based on the weight of the amounts of epoxide added in IV)(1), of continuously added starter (Sc) added in IV)(2) and of epoxide added in VI)(1); and/or
(ii) step IX) forms from 2 to 4 polyether polyols, preferably 2 polyether polyols, with a first alkylene oxide block added to the continuously added starter (Sc) having 20 to 50% by weight of the amounts of epoxide added in IV)(1), of continuously added starter (Sc) added in IV)(2), and of epoxide added in VI)(1), and a second oxide block comprising 10 to 50% by weight of copolymerized oxyethylene, based on the weight of epoxide added in VIII)(1).

12. The process of claim 10 or claim 11, wherein the initially charged starter (Si) comprises a polyoxyalkylene monol formed by adding multiple equivalents of an epoxide to a low equivalent weight monofunctional starter.

13. The process of one of claim 10 to claim 12, wherein the initially charged starter (Si) comprises a polyoxypropylene monol having a hydroxyl number of less than or equal to 80 mg KOH/g.

14. The process of one of claim 10 to claim 13, wherein the continuously added starter (Sc) comprises at least one of glycerin, propylene glycol, dipropylene glycol, ethylene glycol, trimethylolpropane, sucrose, sorbitol, tripropylene glycol, or a low equivalent weight polyol, preferably wherein the continuously added starter (Sc) comprises glycerin and propylene glycol.

15. A viscoelastic foam comprising the reaction product of:
(A) toluene diisocyanate, with
(B) an isocyanate-reactive component comprising the polyether polyol blend of one of claim 1 to claim 8,
in the presence of:
(C) a blowing agent;
(D) a catalyst; and
(E) a surfactant.

## Patentansprüche

1. Polyetherpolyolmischung mit einer Gesamthydroxylzahl von 56 mg KOH/g bis 140 mg KOH/g, einer Gesamtfunktionalität von mehr als 2 und einem Gesamtgehalt an copolymerisiertem Oxyethylen von 20 bis 40 Gew.-%, umfassend:
(a) einen monolgestarteten Oxyalkylenether mit einer Hydroxylzahl kleiner oder gleich 56 mg KOH/g, der kleiner oder gleich 20 % copolymerisiertes Oxyethylen, bezogen auf das Gesamtgewicht des monolgestarteten Oxyalkylenethers (a), enthält;
(b) ein Polyetherpolyol mit einer Hydroxylzahl von 47 mg KOH/g Polyol bis 300 mg KOH/g Polyol und einer nominalen Funktionalität von 2, wobei das Polyetherpolyol einen ersten Oxidblock mit 20 bis 50 % copolymerisiertem Oxyethylen, bezogen auf das Gewicht des Polyetherpolyols am Ende des ersten Oxidblocks, und einen zweiten Oxidblock mit 10 bis 50 Gew.-% copolymerisiertem Oxyethylen, bezogen auf das Gewicht des zweiten Oxidblocks, umfasst; und
(c) ein Polyetherpolyol mit einer Hydroxylzahl von 47 mg KOH/g Polyol bis 300 mg KOH/g Polyol und einer nominalen Funktionalität von mehr als 2 und bis 8, wobei das Polyetherpolyol einen ersten Oxidblock mit 20 bis 50 Gew.-% copolymerisiertem Oxyethylen, bezogen auf das Gewicht des Polyetherpolyols am Ende des ersten Oxidblocks, und einen zweiten Oxidblock mit 10 bis 50 % copolymerisiertem Oxyethylen, bezogen auf das Gewicht des zweiten Oxidblocks, umfasst;
wobei die Polyetherpolyolmischung Folgendes umfasst: (i) 20 bis 50 Gew.-% (a) des monolgestarteten Oxyalkylenethers und (ii) 80 bis 50 % Polyether (b) und (c), wobei die Summe der Gew.-% von (i) und (ii) 100 Gew.-% der Polyetherpolyolmischung beträgt, und
wobei (ii) die 80 bis 50 Gew.-% Polyetherpolyole (b) und (c) Polyetherpolyol (b) in einer Menge von 10 bis 90 Gew.-% und Polyetherpolyol (c) in einer Menge von 90 bis 10 Gew.-% umfassen.

2. Polyetherpolyolmischung nach Anspruch 1, wobei die Gesamthydroxylzahl 80 mg KOH/g bis 120 mg KOH/g beträgt und die Gesamtfunktionalität mehr als 2 und bis zu 3 beträgt.

3. Polyetherpolyolmischung nach Anspruch 1 oder Anspruch 2, wobei (a) der monolgestartete Oxyalkylenether eine Hydroxylzahl von weniger als oder gleich 28 mg KOH/g aufweist und 2 bis 15 Gew.-% copolymerisiertes Oxyethylen, bezogen auf das Gesamtgewicht des monolgestarteten Oxyalkylenethers (a), enthält.

4. Polyetherpolyolmischung nach einem der Ansprüche 1 bis 3, wobei (b) das Polyetherpolyol eine Hydroxylzahl von 70 bis 240 mg KOH/g aufweist und 25 bis 45 Gew.-% copolymerisiertes Oxyethylen in dem ersten Oxidblock, bezogen auf das Gewicht des Polyetherpolyols am Ende des ersten Oxidblocks, und 15 bis 45 Gew.-% copolymerisiertes Oxyethylen in dem zweiten Oxidblock, bezogen auf das Gewicht des zweiten Oxidblocks, umfasst und wobei (c) das Polyetherpolyol eine Hydroxylzahl von 70 bis 240 mg KOH/g und eine nominale Funktionalität von 3 bis 6 aufweist und 25 bis 45 Gew.-% copolymerisiertes Oxyethylen in dem ersten Oxidblock, bezogen auf das Gewicht des Polyetherpolyols am Ende des ersten Oxidblocks, und 15 bis 45 Gew.-% copolymerisiertes Oxyethylen im zweiten Oxidblock, bezogen auf das Gewicht des zweiten Oxidblocks, umfasst.

5. Polyetherpolyolmischung nach einem der Ansprüche 1 bis 4, wobei der erste Oxidblock von (b) dem Polyetherpolyol durch die Copolymerisation von Ethylenoxid und Propylenoxid in Gegenwart eines Starters mit niedrigem Äquivalentgewicht mit einer nominalen Funktionalität von 2 gebildet wird und wobei der erste Oxidblock von (c) dem Polyetherpolyol durch die Copolymerisation von Ethylenoxid und Propylenoxid in Gegenwart eines Starters mit niedrigem Äquivalentgewicht mit einer nominalen Funktionalität von mehr als 2 und bis zu 8 gebildet wird.

6. Polyetherpolyolmischung nach einem der Ansprüche 1 bis 5, die (i) 25 bis 40 Gew.-% (a) des monolgestarteten Oxyalkylenethers und (ii) 75 bis 60 Gew.-% Polyetherpolyole (b) und (c) enthält, wobei die 75 bis 60 Gew.-% Polyetherpolyole (b) und (c) Polyetherpolyol (b) in einer Menge von 30 bis 70 Gew.-% und Polyetherpolyol (c) in einer Menge von 70 bis 30 Gew.-% umfassen.

7. Polyetherpolyolmischung nach einem der Ansprüche 1 bis 6, wobei der zweite Oxidblock des Polyetherpolyols (b) oder des Polyetherpolyols (c) copolymerisiertes Oxyethylen in einer Menge von mindestens 20 bis 45 Gew.- %, bezogen auf das Gewicht des zweiten Oxidblocks, umfasst.

8. Polyetherpolyolmischung nach einem der Ansprüche 1 bis 7, die frei von einem Polyetherpolyol ist, das eine Hydroxylzahl von 20 bis 240 mg KOH/g und eine mittlere Funktionalität von 2 bis 8 aufweist und das mindestens 50 Gew.-% copolymerisiertes Oxyethylen, bezogen auf 100 Gew.-% des Polyetherpolyols, enthält.

9. Verfahren zur Herstellung der Polyetherpolyolmischung nach einem der Ansprüche 1 bis 8, umfassend das Mischen von:
(a) monolgestartetem Oxyalkylenether mit einer Hydroxylzahl kleiner oder gleich 56 mg KOH/g, der kleiner oder gleich 20 Gew.-% copolymerisiertes Oxyethylen, bezogen auf das Gesamtgewicht des monolgestarteten Oxyalkylenethers (a), enthält;
(b) einem Polyetherpolyol mit einer Hydroxylzahl von 47 mg KOH/g bis 300 mg KOH/g und einer nominalen Funktionalität von 2, wobei das Polyetherpolyol einen ersten Oxidblock mit 20 bis 50 % copolymerisiertem Oxyethylen, bezogen auf das Gewicht des Polyetherpolyols am Ende des ersten Oxidblocks, und einen zweiten Oxidblock mit 10 bis 50 Gew.-% copolymerisiertem Oxyethylen, bezogen auf das Gewicht des zweiten Oxidblocks, umfasst; und
(c) einem Polyetherpolyol mit einer Hydroxylzahl von 47 mg KOH/g bis 300 mg KOH/g und einer nominalen Funktionalität von mehr als 2 und bis 8, wobei das Polyetherpolyol einen ersten Oxidblock mit 20 bis 50 Gew.-% copolymerisiertem Oxyethylen, bezogen auf das Gewicht des Polyetherpolyols am Ende des ersten Oxidblocks, und einen zweiten Oxidblock mit 10 bis 50 Gew.-% copolymerisiertem Oxyethylen, bezogen auf das Gewicht des zweiten Oxidblocks, umfasst;
wobei die Polyetherpolyolmischung (i) 20 bis 50 Gew.-% (a) des monolgestarteten Oxyalkylenethers und (ii) 80 bis 50 Gew.% Polyetherpolyole (b) und (c) umfasst, wobei die Summe der Gew.-% von (i) und (ii) 100 Gew.-% der Polyetherpolyolmischung beträgt, und
wobei (ii) die 80 bis 50 Gew.-% Polyetherpolyole (b) und (c) Polyetherpolyol (b) in einer Menge von 10 bis 90 Gew.-% und Polyetherpolyol (c) in einer Menge von 90 bis 10 Gew.-% umfassen.

10. Verfahren zur Herstellung der Polyetherpolyolmischung nach einem der Ansprüche 1 bis 8, umfassend:
I) Eintragen einer Mischung in ein Reaktionsgefäß, die Folgendes umfasst:
(1) einen vorgelegten Starter (Si), der eine monofunktionelle Verbindung mit einer Hydroxylzahl kleiner oder gleich 80 mg KOH/g umfasst, und
(2) einen Doppelmetallcyanid-Katalysator;
II) Eindosieren eines Epoxids, das Propylenoxid und Ethylenoxid in einem Gewichtsverhältnis von 100:0 bis 80:20 umfasst, in das Reaktionsgefäß;
III) Reagierenlassen und Polymerisierenlassen des Epoxids und des vorgelegten Starters (Si) durch Zudosieren des Epoxids, bis das Äquivalentgewicht der monofunktionellen Verbindung um mindestens 10 Gew.-% erhöht ist und einen Wert zwischen 1500 und 6000 erreicht;
IV) Eindosieren eines Epoxids, das Propylenoxid und Ethylenoxid in einem Gewichtsverhältnis von 78:22 bis 45:55 umfasst; während kontinuierlicher Zugabe eines kontinuierlich zugegebenen Starters (Sc) mit einer nominalen Funktionalität von mehr als 2 bis 6 und einem Äquivalentgewicht von 28 bis 400 in das Reaktionsgefäß während fortgesetzter Zudosierung von Epoxid;
V) Abschließen der Zugabe des kontinuierlich zugegebenen Starters (Sc);
VI) Zudosieren eines Epoxids, das Propylenoxid und Ethylenoxid umfasst, das im gleichen Verhältnis wie in IV) (1) zudosiert wird, um den gesamten kontinuierlich zudosierten Starter (Sc) vollständig umzusetzen;
VII) weiter Polymerisierenlassen der Mischung im Reaktionsgefäß, wodurch mindestens zwei Polyetherpolyole mit einem ersten an den kontinuierlich zugegebenen Starter (Sc) addierten Alkylenoxidblock umfassend 20 bis 50 Gew.-% copolymerisiertes Oxyethylen, bezogen auf das Gewicht der Mengen des in IV) (1) zugegebenen Epoxids, des in IV) (2) zugegebenen kontinuierlich zugegebenen Starters (Sc) und des in VI)(1) zugegebenen Epoxids, gebildet werden; und
VIII) Zudosieren eines Epoxids, das Propylenoxid und Ethylenoxid umfasst;
IX) weiter Polymerisierenlassen der Mischung im Reaktionsgefäß, wodurch mindestens zwei Polyetherpolyole mit einem ersten an den kontinuierlich zugegebenen Starter (Sc) addierten Alkylenoxidblock umfassend 20 bis 50 Gew.-% copolymerisiertes Oxyethylen, bezogen auf das Gewicht der Mengen des in IV) (1) zugegebenen Epoxids, des in IV) (2) zugegebenen kontinuierlich zugegebenen Starters (Sc) und des in VI) (1) zugegebenen Epoxids, und einem zweiten Oxidblock umfassend 10 bis 50 Gew.-% copolymerisiertes Oxyethylen, bezogen auf das Gewicht des in VIII) (1) zugegebenen Epoxids, gebildet werden.

11. Verfahren nach Anspruch 10, wobei:
(i) in Schritt VII) 2 bis 4 Polyetherpolyole, vorzugsweise 2 Polyetherpolyole, mit einem ersten an den kontinuierlich zugegebenen Starter (Sc) addierten Alkylenoxidblock umfassend 20 bis 50 Gew.-% copolymerisiertes Oxyethylen, bezogen auf das Gewicht der Mengen des in IV) (1) zugegebenen Epoxids, des in IV) (2) zugegebenen kontinuierlich zugegebenen Starters (Sc) und des in VI) (1) zugegebenen Epoxids gebildet werden; und/oder
(ii) in Schritt IX) 2 bis 4 Polyetherpolyole, vorzugsweise 2 Polyetherpolyole, mit einem ersten an den kontinuierlich zugegebenen Starter (Sc) addierten Alkylenoxidblock umfassend 20 bis 50 Gew.-% der Mengen des in IV) (1) zugegebenen Epoxids, des in IV) (2) zugegebenen kontinuierlich zugegebenen Starters (Sc) und des in VI) (1) zugegebenen Epoxids, und einem zweiten Oxidblock umfassend 10 bis 50 Gew.-% copolymerisiertes Oxyethylen, bezogen auf das Gewicht des in VIII) (1) zugegebenen Epoxids, gebildet werden.

12. Verfahren nach Anspruch 10 oder Anspruch 11, wobei der vorgelegte Starter (Si) ein durch Addieren mehrerer Äquivalente eines Epoxids an einen monofunktionellen Starter mit niedrigem Äquivalentgewicht gebildetes Polyoxyalkylenmonol umfasst.

13. Verfahren nach einem der Ansprüche 10 bis 12, wobei der vorgelegte Starter (Si) ein Polyoxypropylenmonol mit einer Hydroxylzahl kleiner oder gleich 80 mg KOH/g umfasst.

14. Verfahren nach einem der Ansprüche 10 bis 13, wobei der kontinuierlich zugegebene Starter (Sc) mindestens eines von Glycerin, Propylenglykol, Dipropylenglykol, Ethylenglykol, Trimethylolpropan, Saccharose, Sorbitol, Tripropylenglykol oder einem Polyol mit niedrigem Äquivalentgewicht umfasst, vorzugsweise wobei der kontinuierlich zugegebene Starter (Sc) Glycerin und Propylenglykol umfasst.

15. Viskoelastischer Schaumstoff, umfassend das Umsetzungsprodukt von
(A) Toluoldiisocyanat mit
(B) einer isocyanatreaktiven Komponente, die die Polyetherpolyolmischung nach einem der Ansprüche 1 bis 8 umfasst,
in Gegenwart von:
(C) einem Treibmittel;
(D) einem Katalysator; und
(E) einem Tensid.

## Revendications

1. Mélange de polyéther polyols ayant un indice d'hydroxyle global de 56 mg KOH/g à 140 mg KOH/g, une fonctionnalité globale supérieure à 2, et une teneur globale en oxyéthylène copolymérisé de 20 % à 40 % en poids, comprenant :
(a) un éther d'oxyalkylène ayant un indice d'hydroxyle inférieur ou égal à 56 mg KOH/g, initié par un monol, et contenant une quantité inférieure ou égale à 20 % d'oxyéthylène copolymérisé, sur la base du poids total de l'éther d'oxyalkylène initié par un monol (a) ;
(b) un polyéther polyol ayant un indice d'hydroxyle de 47 mg KOH/g polyol à 300 mg KOH/g polyol, et une fonctionnalité nominale de 2, dans lequel le polyéther polyol comprend un premier bloc oxyde ayant 20 % à 50 % d'oxyéthylène copolymérisé, sur la base du poids du polyéther polyol à la fin du premier bloc d'oxyde, et un deuxième bloc d'oxyde comprenant 10 à 50 % en poids d'oxyéthylène copolymérisé, sur la base du poids du deuxième bloc d'oxyde ; et
(c) un polyéther polyol ayant un indice d'hydroxyle de 47 mg KOH/g polyol à 300 mg KOH/g polyol, et une fonctionnalité nominale supérieure à 2 et jusqu'à 8, dans lequel le polyéther polyol comprend un premier bloc d'oxyde ayant 20 % à 50 % en poids d'oxyéthylène copolymérisé, sur la base du poids du polyéther polyol à la fin du premier bloc d'oxyde, et un deuxième bloc d'oxyde comprenant 10 % à 50 % d'oxyéthylène copolymérisé, sur la base du poids du deuxième bloc d'oxyde ;
le mélange de polyéther polyols comprenant : (i) 20 % à 50 % en poids de (a) l'éther d'oxyalkylène initié par un monol, et (ii) 80 % à 50 % de polyéthers (b) et (c), la somme des % en poids de (i) et (ii) totalisant 100 % en poids du mélange de polyéther polyols, et
(ii) les 80 à 50 % en poids de polyéther polyols (b) et (c) comprenant un polyéther polyol (b) en une quantité de 10 à 90 % en poids et un polyéther polyol (c) en une quantité de 90 à 10 % en poids.

2. Mélange de polyéther polyols selon la revendication 1, dans lequel l'indice d'hydroxyle global est de 80 mg KOH/g à 120 mg KOH/g et la fonctionnalité globale est supérieure à 2 et jusqu'à 3.

3. Mélange de polyéther polyols selon la revendication 1 ou la revendication 2, dans lequel (a) l'éther d'oxyalkylène initié par un monol a un indice d'hydroxyle inférieur ou égal à 28 mg KOH/g et contient 2 à 15 % en poids d'oxyéthylène copolymérisé, sur la base du poids total de l'éther d'oxyalkylène initié par un monol (a).

4. Mélange de polyéther polyols selon l'une des revendications 1 à 3, dans lequel (b) ledit polyéther polyol a un indice d'hydroxyle de 70 à 240 mg KOH/g, et comprend 25 % à 45 % en poids d'oxyéthylène copolymérisé dans le premier bloc d'oxyde sur la base du poids du polyéther polyol à la fin du premier bloc d'oxyde, et 15 % à 45 % en poids d'oxyéthylène copolymérisé dans le deuxième bloc d'oxyde, sur la base du poids du deuxième bloc d'oxyde et dans lequel (c) ledit polyéther polyol a un indice d'hydroxyle de 70 à 240 mg KOH/g, une fonctionnalité nominale de 3 à 6, et comprend 25 % à 45 % en poids d'oxyethylene copolymérisé dans le premier bloc d'oxyde sur la base du poids du polyéther polyol à la fin du premier bloc d'oxyde, et 15 % à 45 % en poids d'oxyéthylène copolymérisé dans le deuxième bloc d'oxyde sur la base du poids du deuxième bloc d'oxyde.

5. Mélange de polyéther polyols selon l'une des revendications 1 à 4, dans lequel le premier bloc d'oxyde dudit (b) polyéther polyol est formé par copolymérisation d'oxyde d'éthylène et d'oxyde de propylène en présence d'un amorceur de faible poids équivalent ayant une fonctionnalité nominale de 2 et dans lequel le premier bloc d'oxyde dudit (c) polyéther polyol est formé par copolymérisation d'oxyde d'éthylène et d'oxyde de propylène en présence d'un amorceur de faible poids équivalent ayant une fonctionnalité nominale supérieure à 2 et jusqu'à 8.

6. Mélange de polyéther polyols selon l'une des revendications 1 à 5, qui comprend (i) 25 à 40 % en poids dudit (a) éther d'oxyalkylène initié par un monol, et (ii) 75 à 60 % en poids de polyéther polyols (b) et (c), dans lequel les 75 à 60 % en poids de polyéther polyols (b) et (c) comprennent un polyéther polyol (b) en une quantité de 30 à 70 % en poids, et un polyéther polyol (c) en une quantité de 70 à 30 % en poids.

7. Mélange de polyéther polyols selon l'une des revendications 1 à 6, dans lequel le deuxième bloc d'oxyde du polyéther polyol (b) ou du polyéther polyol (c) comprend de l'oxyéthylène copolymérisé en une quantité d'au moins 20 % à 45 % en poids, sur la base du poids du deuxième bloc d'oxyde.

8. Mélange de polyéther polyols selon l'une des revendications 1 à 7, qui est exempt d'un polyéther polyol ayant un indice d'hydroxyle de 20 à 240 mg KOH/g, une fonctionnalité moyenne de 2 à 8, et qui contient au moins 50 % en poids d'oxyéthylène copolymérisé, sur la base de 100 % en poids du polyéther polyol.

9. Procédé de préparation du mélange de polyéther polyols selon l'une des revendications 1 à 8, comprenant le mélange de :
(a) un éther d'oxyalkylène ayant un indice d'hydroxyle inférieur ou égal à 56 mg KOH/g initié par un monol, et contenant une quantité inférieure ou égale à 20 % en poids d'oxyéthylène copolymérisé, sur la base du poids total de l'éther d'oxyalkylène initié par un monol (a) ;
(b) un polyéther polyol ayant un indice d'hydroxyle de 47 mg KOH/g à 300 mg KOH/g, et une fonctionnalité nominale de 2, dans lequel le polyéther polyol comprend un premier bloc d'oxyde contenant 20 à 50 % en poids d'oxyéthylène copolymérisé sur la base du poids du polyéther polyol à la fin du premier bloc d'oxyde, et un deuxième bloc d'oxyde comprenant 10 à 50 % en poids d'oxyéthylène copolymérisé sur la base du poids du deuxième bloc d'oxyde ; et
(c) un polyéther polyol ayant un indice d'hydroxyle de 47 mg KOH/g à 300 mg KOH/g, et une fonctionnalité nominale supérieure à 2 et jusqu'à 8, dans lequel le polyéther polyol comprend un premier bloc d'oxyde ayant 20 à 50 % en poids d'oxyéthylène copolymérisé sur la base du poids du polyéther polyol à la fin du premier bloc d'oxyde, et un deuxième bloc d'oxyde comprenant 10 à 50 % en poids d'oxyéthylène copolymérisé, sur la base du poids du deuxième bloc d'oxyde ;
dans lequel le mélange de polyéther polyols comprend (i) 20 à 50 % en poids de (a) l'éther d'oxyalkylène initié par un monol et (ii) 80 à 50 % en poids de polyéther polyols (b) et (c), la somme des % en poids de (i) et (ii) totalisant 100 % en poids du mélange de polyéther polyols, et
(ii) les 80 à 50 % en poids de polyéther polyols (b) et (c) comprennent un polyéther polyol (b) en une quantité de 10 à 90 % en poids et un polyéther polyol (c) en une quantité de 90 à 10 % en poids.

10. Procédé de préparation du mélange de polyéther polyols selon l'une des revendications 1 à 8, comprenant :
I) l'introduction dans un récipient de réaction d'un mélange comprenant :
(1) un amorceur initialement chargé (Si) comprenant un composé monofonctionnel ayant un indice d'hydroxyle inférieur ou égal à 80 mg KOH/g, et
(2) un catalyseur de cyanure métallique double ;
II) l'alimentation d'un époxyde comprenant de l'oxyde de propylène et de l'oxyde d'éthylène en un rapport pondéral de 100:0 à 80:20, dans le récipient de réaction ;
III) le fait de laisser réagir et polymériser l'époxyde et l'amorceur initialement chargé (Si) par alimentation de l'époxyde jusqu'à ce que le poids équivalent du composé monofonctionnel soit augmenté d'au moins 10 % en poids et atteigne une valeur comprise entre 1 500 et 6 000 ;
IV) l'alimentation d'un époxyde comprenant de l'oxyde de propylène et de l'oxyde d'éthylène en un rapport pondéral de 78:22 à 45:55, tout en ajoutant en continu un amorceur ajouté en continu (Sc) ayant une fonctionnalité nominale supérieure à 2 jusqu'à 6 et un poids équivalent de 28 à 400 dans le récipient de réaction tout en continuant à alimenter d'époxyde ;
V) la finition de l'ajout de l'amorceur ajouté en continu (Sc) ;
VI) l'alimentation d'un époxyde comprenant de l'oxyde de propylène et de l'oxyde d'éthylène alimentés au même rapport que IV) (1) pour faire réagir totalement tout l'amorceur ajouté en continu (Sc) ;
VII) le fait de laisser le mélange continuer à polymériser dans le récipient de réaction, formant ainsi au moins deux polyéther polyols avec un premier bloc d'oxyde d'alkylène ajouté à l'amorceur ajouté en continu (Sc) ayant de 20 à 50 % en poids d'oxyéthylène copolymérisé, sur la base du poids des quantités d'époxyde ajouté en IV) (1), d'amorceur ajouté en continu (Sc) ajouté en IV) (2), et d'époxyde ajouté en VI) (1) ; et
VIII) l'alimentation d'un époxyde comprenant de l'oxyde de propylène et de l'oxyde d'éthylène ;
IX) le fait de laisser le mélange continuer à polymériser dans le récipient de réaction formant ainsi au moins deux polyéther polyols avec un premier bloc d'oxyde d'alkylène ajouté à l'amorceur ajouté en continu (Sc) ayant 20 à 50 % en poids d'oxyéthylène copolymérisé, sur la base du poids des quantités d'époxyde ajouté en IV) (1), d'amorceur ajouté en continu (Sc) en IV) (2), et d'époxyde ajouté en VI) (1), et un deuxième bloc d'oxyde comprenant 10 à 50 % en poids d'oxyéthylène copolymérisé, sur la base du poids d'époxyde ajouté en VIII) (1).

11. Procédé selon la revendication 10, dans lequel :
(i) l'étape VII) forme de 2 à 4 polyéther polyols, de préférence 2 polyéther polyols, avec un premier bloc d'oxyde d'alkylène ajouté à l'amorceur ajouté en continu (Sc) ayant 20 à 50 % en poids d'oxyéthylène copolymérisé, sur la base du poids des quantités d'époxyde ajouté en IV) (1), d'amorceur ajouté en continu (Sc) ajouté en IV) (2) et d'époxyde ajouté en VI) (1) ; et/ou
(ii) l'étape IX) forme de 2 à 4 polyéther polyols, de préférence 2 polyéther polyols, avec un premier bloc d'oxyde d'alkylène ajouté à l'amorceur ajouté en continu (Sc) ayant 20 à 50 % en poids des quantités d'époxyde ajouté en IV) (1), d'amorceur ajouté en continu (Sc) ajouté en IV) (2), et d'époxyde ajouté en VI) (1), et un deuxième bloc d'oxyde comprenant 10 à 50 % en poids d'oxyéthylène copolymérisé, sur la base du poids d'époxyde ajouté en VIII) (1).

12. Procédé selon la revendication 10 ou la revendication 11, dans lequel l'amorceur initialement chargé (Si) comprend un polyoxyalkylène monol formé par ajout de multiples équivalents d'un époxyde à un amorceur monofonctionnel de faible poids équivalent.

13. Procédé selon l'une quelconque des revendications 10 à 12, dans lequel l'amorceur initialement chargé (Si) comprend un polyoxypropylène monol ayant un indice d'hydroxyle inférieur ou égal à 80 mg KOH/g.

14. Procédé selon l'une des revendications 10 à 13, dans lequel l'amorceur ajouté en continu (Sc) comprend au moins l'un parmi la glycérine, le propylène glycol, le dipropylène glycol, l'éthylène glycol, le triméthylolpropane, le saccharose, le sorbitol, le tripropylèneglycol ou un polyol de faible poids équivalent, de préférence dans lequel l'amorceur ajouté en continu (Sc) comprend de la glycérine et du propylèneglycol.

15. Mousse viscoélastique comprenant le produit de réaction de :
(A) diisocyanate de toluène, avec
(B) un composant réactif vis-à-vis d'un isocyanate comprenant le mélange de polyéther polyols selon l'une des revendications 1 à 8,
en présence de :
(C) un agent de gonflement ;
(D) un catalyseur ; et
(E) un tensioactif.
